# EUROPÄISCHE PATENTSCHRIFT

(11) **EP 4 279 019 B1**
(45) Veröffentlichungstag und Bekanntmachung des Hinweises auf die Patenterteilung: **12.03.2025**
(21) Anmeldenummer: 22174621.7
(22) Anmeldetag: 20.05.2022
(51) Int. Cl.: A61C 7/14

(54) **SYSTEM ZUR ÜBERTRAGUNG ORTHODONTISCHER WERKZEUGE UND TEILESATZ UMFASSEND DAS SYSTEM ZUR ÜBERTRAGUNG ORTHODONTISCHER WERKZEUGE**
ORTHODONTIC TOOL TRANSMISSION SYSTEM AND KIT OF PARTS COMPRISING THE ORTHODONTIC TOOL TRANSMISSION SYSTEM
SYSTÈME DE TRANSFERT DES OUTILS ORTHODONTIQUES ET JEU DE PIÈCES COMPRENANT LE SYSTÈME DE TRANSFERT DES OUTILS ORTHODONTIQUES

(43) Veröffentlichungstag der Anmeldung: 22.11.2023
(73) Patentinhaber: Fachlabor Dr. W. Klee für grazile Kieferorthopädie GmbH, 60386 Frankfurt am Main (DE)
(72) Erfinder: MEHRKAM, Behrang, 63454 Hanau (DE); KLEE, Felix, 63755 Alzenau (DE)
(74) Vertreter: Metten, Karl-Heinz

(56) Entgegenhaltungen:
- EP-A1- 2 783 655
- EP-A2- 0 349 522
- WO-A1-2008/101541
- ES-A1- 2 065 859
- US-A- 4 183 141
- US-A- 5 791 896
- US-A1- 2004 229 185
- US-A1- 2018 318 046
- US-A1- 2022 338 960

## Beschreibung

Die vorliegende Erfindung betrifft ein System zur Übertragung mindestens eines orthodontischen Werkzeugs auf eine Ziel-Zahnoberfläche im Oberkiefer oder im Unterkiefer eines Patienten. Ferner betrifft die Erfindung ein Kit-of-parts, umfassend mindestens ein System und ein orthodontisches Werkzeug. Übertragungshilfen für orthodontische Werkzeuge sind aus dem Stand der Technik bekannt. Die DE 20 2016 101200 U1 offenbart eine Steuerungsstruktur für die Positionierung kieferorthopädischer Brackets zum Zweck einer kieferorthopädischen Behandlung mittels eines Positionierungs-Jigs (auch Positionierungs-Schablone oder Schablone genannt). Der Positionierungs-Jigs hat eine Halterung, welche ein Bracket während seiner Befestigung am Zahn abnehmbar abstützen kann. Die Steuerungsstruktur hat zu ihrer Positionierung mindestens eine erste Öffnung, die ähnlich dem dreidimensionalen Wachstum eines Zahns ausgebildet ist, und eine zweite Öffnung, mit der der Positionierungs-Jig in eine ungefähre Position zur Steuerungsstruktur gebracht wird, um das Bracket auf der entsprechenden Zahnoberfläche (gemäß dem kieferorthopädischen Behandlungsplan) zu bringen. Für mehrere Zähne sind jeweils individuell angepasste Jigs vorgesehen. Damit die vielen verschiedenen Jigs korrekt in den jeweiligen zweiten Öffnungen eingesetzt werden, sind Referenzcodes an den Jigs und der Struktur vermerkt. Solche Systeme haben den Nachteil, dass zwar alle Informationen zum Ausrichten der orthodontischen Werkzeuge auf den Zahnoberflächen in den Übertragungshilfen enthalten sind, dennoch mangelt es solchen Systemen an einem Mechanismus, der die Übertragungshilfen nicht nur eindeutig platziert, sondern auch sicherstellt, dass die Übertragungshilfen auch an dieser optimierten Position verharren. Weiterhin sind die hekannten Systeme, die aus einer Schiene und einer Positionierungshilfe bestehen, äußerst platzeinnehmend und bedecken große Teile der Zähne nach dem Einsetzen der Übertragungshilfe in die Mundhöhle des Patienten. Üblicherweise werden die orthodontischen Werkzeuge in der Übertragungsstellung mithilfe eines Klebstoffes mit der Ziel-Zahnoberfläche verbunden. Dies führt regelmäßig dazu, dass durch eine nicht eindeutig definierte Position des orthodontischen Werkzeuges vor der Zahnoberfläche unnötigerweise viel Klebstoff zwischen dem orthodontischen Werkzeug und der Zahnoberfläche hervorquillt.

US4183141A offenbart eine Vorrichtung zum Anbringen einer Klammer an einer vorgegebenen Position auf der labialen oder bukkalen Oberfläche eines Zahns. Die Vorrichtung umfasst eine starre Kappe mit einer Innenform, die dem Kronenabschnitt eines Zahns entspricht. Ein hohles Führungselement ist an der Kappe befestigt und weist einen länglichen Führungsabschnitt auf, der sich quer zur labialen Oberfläche des Zahns und von dieser nach außen erstreckt.

Die aus dem Stand der Technik bekannten Systeme sind noch stets mit Nachteilen behaftet und lassen Wünsche offen.

Die Erfindung wird durch die beigefügten Ansprüche definiert.

Der vorliegenden Erfindung lag daher die Aufgabe zugrunde, die Nachteile des Stands der Technik betreffend Systeme zur Übertragung orthodontischer Werkzeuge auf Zähne zu überwinden. Insbesondere lag der Erfindung die Aufgabe zugrunde, ein System zur Verfügung zu stellen, welches die Position der zu übertragenden Werkzeuge eindeutig sicherstellt und dennoch einfach und platzsparend in der Handhabung ist. Ferner soll sichergestellt werden, dass die orthodontischen Werkzeuge möglichst gut auf den Zähnen haften und Nacharbeiten möglichst reduziert werden.

Demgemäß wurde nach einem ersten Aspekt der Erfindung ein System zur Übertragung mindestens eines orthodontischen Werkzeugs auf eine Ziel-Zahnoberfläche im Oberkiefer oder im Unterkiefer eines Patienten gefunden (auch erste Übertragungshilfe genannt), umfassend mindestens eine, insbesondere genau eine, Zahnschiene für eine Vielzahl von Zähnen, ausgelegt und eingerichtet eine kraftschlüssige, insbesondere kraft- und formschlüssige, Paarung mit mindestens einem Zahn, insbesondere mehreren Zähnen im Oberkiefer oder im Unterkiefer des Patienten einzugehen. Hierbei weist die mindestens eine Zahnschiene mindestens eine Führung, insbesondere einen Führungskanal, umfassend eine Eintrittsöffnung, auf, und mindestens eine Schablone, umfassend einen Tragarm mit einem Träger, der dazu ausgelegt und eingerichtet ist, ein orthodontisches Werkzeug lösbar zu halten, und einen auf die Führung abgestimmten, insbesondere formkomplementären, Mitnehmer, wie ein Gleitstift. Das System umfasst im Bereich der Führung und/oder des Mitnehmers eine Positionierungseinheit, die dazu ausgelegt und eingerichtet ist, den Mitnehmer in der Führung lösbar translatorisch zu fixieren, sodass der Träger der Schablone relativ zu der Zahnschiene in einer vorbestimmten Position vorliegt. Bei dem erfindungsgemäßen System liegt demgemäß im Bereich der Führung und/oder, insbesondere und, des Mitnehmers eine Positionierungseinheit vor, die den Mitnehmer in der Führung lösbar translatorisch fixieren kann, sodass der Träger der Schablone relativ zu der Zahnschiene in eine vorbestimmte Position bringbar ist. Die mindestens eine Zahnschiene für die Vielzahl von Zähnen ist dabei zweckmäßigerweise derart konzipiert, dass sie eine kraftschlüssige, insbesondere kraft- und formschlüssige, Paarung mit mindestens einem Zahn, insbesondere mehreren Zähnen, im Oberkiefer oder im Unterkiefer des Patienten herbeiführt. Bei dem erfindungsgemäßen System ist vorgesehen, dass der Träger ein orthodontisches Werkzeug lösbar halten kann.

Orthodontische Werkzeuge im Sinne der vorliegenden Erfindung können beispielsweise sogenannte Brackets, Buttons oder Attachments sein, die als Fixpunkte für Drähte oder Schlingen dienen können, die wiederum durch ihre spezielle Form, Länge oder physikalischen Eigenschaften dafür sorgen, eine Fehlstellung von Zähnen in einem Gebiss zu korrigieren. Orthodontische Werkzeuge können mit dem erfindungsgemäßen System, insbesondere durch die Positionierungseinheit besonders sicher und positionsgetreu übertragen werden.

In dem erfindungsgemäßen System zur Übertragung mindestens eines orthodontischen Werkzeugs umfasst die mindestens eine Positionierungseinheit einen Abstandshalter, insbesondere Anschlag, ausgelegt und eingerichtet, die translatorische Bewegung des Mitnehmers in der Führung in der Weise zu begrenzen, dass der Träger der mindestens einen Schablone relativ zu der Zahnschiene in einem vorbestimmten ersten Abstand vorliegt. Demgemäß kann über den Abstandshalter, insbesondere Anschlag, die translatorische Bewegung des Mitnehmers in der Führung in der Weise begrenzt werden, dass der Träger der Schablone relativ zu der Zahnschiene in einem vorbestimmten ersten Abstand vorliegt.

Der Abstandshalter dient zur eindeutigen Einstellung der Übertragungsstellung. Es hat sich gezeigt, dass die Übertragung der orthodontischen Werkzeuge besonders sicher erfolgen kann, wenn eine nicht zu überwindende Barriere in Form eines Abstandshalters zur Verfügung steht. Wird die Schablone in die Führung eingeschoben und schlägt am Abstandhalter an, verhindert der Abstandhalter sicher ein noch tieferes Einschieben der Schablone in Führung.

Ferner umfasst die erfindungsgemäße Positionierungseinheit mindestens einen ersten, insbesondere radialen, Vorsprung, insbesondere eine axiale Schulter, an dem Mitnehmer und mindestens einen ersten Rücksprung an der Innenfläche der Führung, insbesondere des Führungskanals, oder mindestens einen ersten, insbesondere radialen, Vorsprung, insbesondere eine axiale Schulter, an der Innenfläche der Führung, insbesondere dem Führungskanal, und wobei die Positionierungseinheit mindestens einen ersten Rücksprung an dem Mitnehmer umfasst (in beiden zuvor genannten Alternativen auch zweite Übertragungshilfe genannt).

Durch die Verwendung von Vor- und Rücksprüngen auf dem Mitnehmer, die an der Innenfläche der Führung aufgenommen werden können, hat sich überraschender Weise gezeigt, dass die Übertragungsstellung eindeutig und sicher eingestellt werden kann. Durch die genaue Festlegung der Übertragungsstellung des orthodontischen Werkzeugs hat sich in überraschender Weise gezeigt, dass die Platzierung der Werkzeuge vor den mit den orthodontischen Werkzeugen zu bestückenden Zähnen deutlich schneller als bei herkömmlichen Systemen erfolgen kann. Das erfindungsgemäße System hat weiterhin den Vorteil, dass im Vergleich zu herkömmlichen Systemen signifikant weniger Klebstoff zwischen den mit orthodontischen Werkzeugen zu bestückenden Zähnen und dem zu übertragenden orthodontischen Werkzeug während der Übertragung hervorquillt. Ohne an eine Theorie gebunden zu sein, wird vermutet, dass das erfindungsgemäße System eine besonders präzise Platzierung der orthodontischen Werkzeuge möglich macht. Folglich braucht überschüssiger und insbesondere überschüssiger und ausgehärteter Kleber, nicht aufwendig entfernt werden. Die Verwendung von Vor- und Rücksprüngen hat ferner den Vorteil, dass bei der Nutzung der Übertragungshilfe eine sensorisch wahrnehmbare Rückmeldung der Übertragungshilfe an den Nutzer der Übertragungshilfe in Form eines Einrastens bzw. Klickens übermittelt wird. Somit erkennt der Nutzer eindeutig, dass die Übertragungsstellung eingenommen wurde.

Hierbei hat sich als vorteilshaft erwiesen, dass in dem Fall, dass die Positionierungseinheit einen Abstandhalter und Vor- und/oder Rücksprünge umfasst, die korrespondierenden Vor- und/oder Rücksprünge der Führung und der Schablone beim Einschieben des Mitnehmers einrasten und der Mitnehmer zugleich an den Abstandshalter anstößt. Könnten die eingerasteten korrespondierenden Vor- und Rücksprünge ohne Abstandshalter noch durch zu festes Drücken überwunden bzw. gegeneinander verschobene werden, hat der Abstandshalter den Effekt, dass der Mitnehmer besonderes zuverlässig nicht zu tief in die Führung eingeschoben werden kann. Weiterhin können die Mitnehmer durch dieses System im Vergleich zu den bekannten Systemen besonders schnell und zuverlässig an der Zahnschiene montiert werden. Ein Nachjustieren ist nicht mehr notwendig.

Bei dem erfindungsgemäßen System liegt bei der Paarung, insbesondere dem formkomplementären Ineinandergreifen, des ersten Vorsprungs und des ersten Rücksprungs der Träger der mindestens einen Schablone in einer Übertragungsstellung relativ zu einem vorbestimmtem, der Schablone zugeordneten oder zuordenbaren Zahn in dem ersten Abstand vor.

Die Übertragungsstellung stellt eine solche Ausrichtung des Systems dar, in der der Träger der Schablone derart vor der Ziel-Zahnoberfläche positioniert ist, dass ein damit zu übertragendes orthodontisches Werkzeug, z.B. ein Bracket, mit der Ziel-Zahnoberfläche verklebt werden kann. Der erste Abstand wird dabei vorzugweise so gewählt, dass der Abstand eines in dem Träger lösbar vorliegenden orthodontischen Werkzeugs, insbesondere der zu verklebenden Oberfläche des orthodontischen Werkzeugs, von der Zahnoberfläche im Bereich von 0,1 mm bis 1 mm, vorzugsweise im Bereich von 0,2 bis 1 mm und insbesondere im Bereich von 0,3 bis 0,8 mm liegt.

Ferner kann bei dem erfindungsgemäßen System bei der Paarung, insbesondere dem formkomplementären Ineinandergreifen, des ersten Vorsprungs und des ersten Rücksprungs der Träger der mindestens einen Schablone in einer Haltestellung relativ zu einem vorbestimmtem, der Schablone zugeordneten oder zuordenbaren Zahn in einem zweiten Abstand vorliegen.

Die Haltestellung stellt dabei eine solche Ausrichtung des Systems dar, in der der Träger der Schablone derart weit vor der Ziel-Zahnoberfläche positioniert ist, dass ein unbeabsichtigtes Verkleben eines in dem Träger lösbar vorliegenden orthodontischen Werkzeugs mit der Ziel-Zahnoberfläche verhindert werden kann. Der zweite Abstand stellt dabei den Abstand des Trägers zu der korrespondierenden Ziel-Zahnoberfläche in der Haltestellung dar. Der zweite Abstand ist somit größer als der erste Abstand. Der zweite Abstand wird dabei vorzugweise so gewählt, dass der Abstand eines in dem Träger lösbar vorliegenden orthodontischen Werkzeugs, insbesondere der zu verklebenden Oberfläche des orthodontischen Werkzeugs, von der Zahnoberfläche bei mindestens 4 mm, bevorzugt bei mindestens 6 mm und besonders bevorzugt nicht oberhalb von 20 mm und insbesondere nicht oberhalb von 10 mm liegt, beispielsweise im Bereich von 4 bis 8 mm.

Gemäß einem dritten Aspekt des erfindungsgemäßen Systems (auch dritte Übertragungshilfe genannt) umfasst die Positionierungseinheit in Bezug auf die Eintrittsöffnung jenseits des mindestens einen ersten Vorsprungs beabstandet hiervor mindestens einen zweiten Vorsprung, insbesondere eine axiale Schulter, insbesondere an der Innenfläche der Führung, insbesondere des Führungskanals, oder jenseits des mindestens ersten Rücksprungs beabstandet hiervor mindestens einen zweiten Rücksprung, insbesondere an der Innenfläche der Führung, insbesondere des Führungskanals, umfasst.

Bei dem erfindungsgemäßen System nach dem dritten Aspekt der Erfindung liegt bei der Paarung, insbesondere dem formkomplementären Ineinandergreifen, des ersten Vorsprungs oder Rücksprungs des Mitnehmers und des ersten Vorsprungs oder Rücksprungs der Führung der Träger der mindestens einen Schablone in einer Haltestellung relativ zu einem vorbestimmtem, der Schablone zugeordneten oder zuordenbaren Zahn in dem zweiten Abstand vor.

Alternativ liegt bei dem erfindungsgemäßen System nach dem dritten Aspekt der Erfindung bei der Paarung, insbesondere dem formkomplementären Ineinandergreifen, des ersten Vorsprungs oder Rücksprungs des Mitnehmers und des zweiten Vorsprungs oder Rücksprungs der Führung der Träger der mindestens einen Schablone in einer Übertragungsstellung relativ zu einem vorbestimmtem, der Schablone zugeordneten oder zuordenbaren Zahn in dem ersten Abstand vor.

Gemäß einem vierten Aspekt des erfindungsgemäßen Systems (auch vierte Übertragungshilfe genannt) umfasst die Positionierungseinheit in Bezug auf den Tragarm jenseits des mindestens einen ersten Vorsprungs beabstandet hiervor mindestens einen zweiten Vorsprung, insbesondere eine axiale Schulter, insbesondere am Mitnehmer, oder in Bezug auf den Tragarm jenseits des mindestens einen ersten Vorsprungs beabstandet hiervor mindestens einen ersten Rücksprungs beabstandet hiervor mindestens einen zweiten Rücksprung, insbesondere am Mitnehmer.

Bei dem erfindungsgemäßen System nach dem vierten Aspekt der Erfindung liegt bei der Paarung, insbesondere dem formkomplementären Ineinandergreifen, des ersten Vorsprungs oder Rücksprungs des Mitnehmers und des ersten Vorsprungs oder Rücksprungs der Führung der Träger der mindestens einen Schablone in einer Haltestellung relativ zu einem vorbestimmtem, der Schablone zugeordneten oder zuordenbaren Zahn in dem zweiten Abstand vor.

Alternativ liegt bei dem erfindungsgemäßen System nach dem vierten Aspekt der Erfindung bei der Paarung, insbesondere dem formkomplementären Ineinandergreifen, des zweiten Vorsprungs oder Rücksprungs des Mitnehmers und des ersten Vorsprungs oder Rücksprungs der Führung der Träger der mindestens einen Schablone in einer Übertragungsstellung relativ zu einem vorbestimmtem, der Schablone zugeordneten oder zuordenbaren Zahn in dem ersten Abstand vor.

Durch das Vorsehen von zwei Vor- oder Rücksprüngen auf dem Mitnehmer oder an der Führung gemäß dem dritten und vierten Aspekt der Erfindung kann die Schablone wahlweise in einer Haltestellung oder in einer Übertagungsstellung vorliegen. Somit können die Schablonen und gegebenenfalls die darin befestigten Werkzeuge bereits zum Zeitpunkt der Auslieferung an den Anwender des Systems, insbesondere den Kieferorthopäden, verfahrbar in der ihnen zugeordneten Führung der Zahnschiene in der Haltestellung oder Übertragungsstellung angeordnet werden. Es hat sich gezeigt, dass auf diese Weise die Schablonen und gegebenenfalls das darin lösbar befestigte orthodontische Werkzeuge in besonders verlässlicher Weise in der Zahnschiene gehalten werden. Zum Verkleben der orthodontischen Werkzeuge können die Schablonen von der Haltestellung in die Übertragungsstellung verfahren werden.

Durch die Verwendung von Vor- und Rücksprüngen auf dem Mitnehmer bzw. der Führung, dass die an der Innenfläche der Führung bzw. der Oberfläche des Mitnehmers aufgenommen werden können, hat sich in überraschender Weise gezeigt, dass die Übertragungsstellung und/oder die Haltstellung eindeutig und sicher eingestellt werden können. Die Verwendung von Vor- und Rücksprüngen hat ferner den Vorteil, dass bei Nutzung der Übertragungshilfe eine sensorisch wahrnehmbare Rückmeldung der Übertragungshilfe an den Nutzer der Übertragungshilfe in Form eines Einrastens bzw. Klickens übermittelt wird. Somit erkennt der Nutzer eindeutig, dass die Übertragungsstellung eingenommen wurde, insbesondere dann, wenn er die Schablone aus der Haltestellung in die Übertragungsstellung bewegt wird.

Gemäß einem fünften Aspekt des erfindungsgemäßen Systems (auch fünfte Übertragungshilfe genannt), umfasst die Positionierungseinheit in Bezug auf die Eintrittsöffnung jenseits des mindestens einen ersten Vorsprungs beabstandet hiervor mindestens einen zweiten Vorsprung, insbesondere eine axiale Schulter, insbesondere an der Innenfläche der Führung, insbesondere des Führungskanals, oder in Bezug auf die Eintrittsöffnung jenseits des mindestens einen ersten Rücksprungs beabstandet hiervor mindestens einen zweiten Rücksprung, insbesondere an der Innenfläche der Führung, insbesondere des Führungskanals. Weiterhin umfasst die Positionierungseinheit gemäß dem fünften Aspekt des erfindungsgemäßen Systems in Bezug auf den Tragarm jenseits des mindestens einen ersten Vorsprungs beabstandet hiervor mindestens einen zweiten Vorsprung, insbesondere eine axiale Schulter, insbesondere am Mitnehmer, oder in Bezug auf den Tragarm jenseits des mindestens einen ersten Rücksprungs beanstandet hiervor mindestens einen zweiten Rücksprung, insbesondere am Mitnehmer.

Bei dem erfindungsgemäßen System nach dem fünften Aspekt der Erfindung liegt bei der Paarung, insbesondere dem formkomplementären Ineinandergreifen, des ersten Vorsprungs oder Rücksprungs des Mitnehmers und des ersten Vorsprungs oder Rücksprungs der Führung der Träger der mindestens einen Schablone in einer Haltestellung relativ zu einem vorbestimmtem, der Schablone zugeordneten oder zuordenbaren Zahn in dem zweiten Abstand vor.

Alternativ liegt bei dem erfindungsgemäßen System nach dem fünften Aspekt der Erfindung bei der Paarung, insbesondere dem formkomplementären Ineinandergreifen, des zweiten Vorsprungs oder Rücksprungs des Mitnehmers und des ersten Vorsprungs oder Rücksprungs der Führung der Träger der mindestens einen Schablone in einer Übertragungsstellung relativ zu einem vorbestimmtem, der Schablone zugeordneten oder zuordenbaren Zahn in dem ersten Abstand vor.

Gemäß einer weiteren Alternative liegt bei dem erfindungsgemäßen System nach dem fünften Aspekt der Erfindung bei der Paarung, insbesondere dem formkomplementären Ineinandergreifen, des ersten Vorsprungs oder Rücksprungs des Mitnehmers und des zweiten Vorsprungs oder Rücksprungs der Führung der Träger der mindestens einen Schablone in einer Übertragungsstellung relativ zu einem vorbestimmtem, der Schablone zugeordneten oder zuordenbaren Zahn in dem ersten Abstand vor.

In einer bevorzugten Ausgestaltungsform des erfindungsgemäßen Systems nach dem ersten, zweiten, dritten, vierten oder fünften Aspekt der Erfindung ist der Abstandshalter einstückig mit der Schablone, insbesondere dem Mitnehmer, oder der Führung, insbesondere der Zahnschiene, ausgebildet. Solche Systeme reduzieren die Komplexität der Übertragungshilfe und gewährleisten eine einfache und zuverlässige Anwendung.

In einer weiteren bevorzugten Ausgestaltungform des erfindungsgemäßen Systems nach dem ersten, zweiten, dritten, vierten oder fünften Aspekt der Erfindung, ist der mindestens eine erste Vorsprung oder Rücksprung und/oder der mindestens eine zweite Vorsprung oder Rücksprung einstückig an der Schablone, insbesondere dem Mitnehmer, oder an der Führung, insbesondere der Zahnschiene, ausgebildet ist. Alternativ oder zusätzlich kann vorgesehen sein, dass der mindestens eine Rücksprung oder Vorsprung und der mindestens eine zweite Rücksprung oder Vorsprung einstückig an der Führung, insbesondere der Zahnschiene oder an der Schablone, insbesondere dem Mitnehmer, ausgebildet ist. Solche Systeme reduzieren die Komplexität der Übertragungshilfe und gewährleisten eine einfache und zuverlässige Anwendung.

In einer noch weiteren bevorzugten Ausgestaltungform des erfindungsgemäßen Systems nach dem ersten, zweiten, dritten, vierten oder fünften Aspekt der Erfindung weist der Träger eine auf die Ziel-Zahnoberfläche gerichtete Tragfläche mit einer Tragvertiefung zur kraftschlüssigen, insbesondere kraft- und formschlüssigen, Aufnahme des orthodontischen Werkzeugs, insbesondere eine zu dem orthodontischen Werkzeug formkomplementäre Tragvertiefung, auf. Die Tragvertiefung ist dabei an das verwendete orthodontische Werkzeug angepasst, sodass diese sich in der Tragvertiefung aufgenommen werden kann.

Durch die Tragvertiefung können die orthodontischen Werkzeuge zuverlässig im Träger reversibel gehalten werden. Nach der endgültigen Befestigung der ordentlichen Werkzeuge auf der Zahnoberfläche, können die Schablonen von den orthodontischen Werkzeugen gelöst werden und aus dem Mund des Patienten entfernt werden. Weiterhin ist es bereits vor der Auslieferung des Systems an dessen Nutzer möglich, ebenfalls die orthodontischen Werkzeuge in die dafür vorgesehenen Tragvertiefungen der Schablone aufzunehmen. Dies hat den besonderen Vorteil, dass zur Anwendung des Systems zur Übertragung orthodontischer Werkzeuge weniger Arbeitsschritte anfallen als bei bekannten Systemen und somit auch weniger Fehlerquellen auftreten können.

In einer zweckmäßigen Ausgestaltungform des erfindungsgemäßen Systems nach dem ersten, zweiten, dritten, vierten oder fünften Aspekt der Erfindung, weist die Tragvertiefung mindestens einen Tragvertiefungsvorsprung, insbesondere mindestens zwei, vorzugsweise quer, insbesondere senkrecht, zu einer, vorzugsweise linearen, Bewegungsrichtung der Schablone gegenüberliegende, Tragvertiefungsvorsprünge, zur kraftschlüssigen, insbesondere kraft- und formschlüssigen, Aufnahme des orthodontischen Werkzeugs auf, wobei insbesondere sich der wenigstens eine Tragvertiefungsvorsprung quer zu einer Bewegungsrichtung der Schablone in den Träger erstreckt. Die Tragvertiefungsvorsprünge helfen dabei ein ungewolltes Herausfallen der orthodontischen Werkzeuge noch sicherer zu verhindern.

Solche Systeme gemäß dem ersten, zweiten, dritten, vierten oder fünften Aspekt der Erfindung sind bevorzugt, bei denen die Tragvertiefung die Tragfläche vollständig oder teilweise, insbesondere teilweise, einnimmt. So ist es möglich, dass die Tragvertiefung auch solche orthodontischen Werkzeuge aufnimmt, deren Ausmaße größer sind als die Tragfläche. Beispielsweise ist es denkbar, dass das orthodontische Werkzeug über einen Fortsatz verfügt, der über den Rand der Tragfläche in einer dafür vorgesehen Aussparung, die die Tragfläche und Teile des Trägers umfasst, hinausragt.

In einer weiteren zweckmäßigen Ausgestaltungform des Systems nach dem ersten, zweiten, dritten, vierten oder fünften Aspekt der Erfindung, umfassen bzw. stellen die Führung und die Zahnschiene ein einstückig gefertigtes Kunststoffbauteil dar.

In einer bevorzugten Ausführungsform des System nach dem ersten, zweiten, dritten, vierten oder fünften Aspekt der Erfindung ist die Schablone an der Zahnschiene, insbesondere an der Führung, beweglich, insbesondere translatorisch in einer Längsrichtung, gehalten ist, wobei die Bewegung der Schablone in die Führung hinein und aus der Führung hinaus entlang zweier im Wesentlichen parallel zueinander verlaufenden Achsen Xund Yerfolgt, wobei die Achse X die Längsachse der Führung darstellt und die Achse Y die Einschubrichtung des Werkzeugs W in die Tragvertiefung. Eine solche Ausgestaltung stellt sicher, dass die Schablone einfach von dem orthodontischen Werkzeug nach dessen Verkleben mit einem korrespondieren Zahn abgezogen werden kann. Würden die Achsen nicht, wie zuvor ausgeführt im Wesentlichen parallel zueinander verlaufen, kann es zu einem Verkanten der Schablone mit dem orthodontischen Werkzeug kommen und ein Abziehen wäre nicht oder nur sehr schwer bzw. unter starker Belastung des orthodontischen Werkzeugs möglich.

In einer zweckmäßigen Ausführungsform des Systems nach dem ersten, zweiten, dritten, vierten oder fünften Aspekt der Erfindung, weisen die Schablone und/oder die Führung einen runden oder polygonalen, insbesondere viereckigen Querschnitt auf, wobei insbesondere die Form der Querschnitte der Schablone und der Führung zueinander korrespondieren. Als besonderes praktikablen haben sich polygonale, insbesondre rechteckige, Querschnitte erwiesen. Auf diese Weise kann die Ausrichtung der Schablone zum Einführen in die Führung somit im Wesentlichen vorgegeben werden.

In einer besonders bevorzugten Ausführungsform des erfindungsgemäßen Systems nach dem ersten, zweiten, dritten, vierten oder fünften Aspekt der Erfindung, umfasst der, insbesondere in Zapfenform vorliegende, Mitnehmer der Schablone mindestens zwei, insbesondere der Länge nach, voneinander beanstandete, insbesondere federelastische, Ausleger, die sich von dem dem Tragarm gegenüberliegenden Ende des Mitnehmers in Richtung des Tragarms erstrecken und insbesondere einstückig ineinander übergehen. Hierbei können die Vor- und/oder Rücksprünge auf der zu der Innenseite der Führung weisenden Oberfläche der Ausleger vorgesehen sein.

Als besonders zweckmäßig haben sich auch solche Ausführungsformen erwiesen, bei denen der Mitnehmer an dem dem Tragarm gegenüberliegenden Ende oder im Bereich des dem Tragarm gegenüberliegenden Endes einen Durchmesser aufweist, der größer ist als der Durchmesser der Führung und wobei die mindestens zwei Ausleger in einem Umfang voneinander beabstandet sind, dass sie aufeinander zu bewegbar sind, so dass der Mitnehmer in die Führung einführbar ist, insbesondere bis zum Erreichen der Übertragungsstellung.

Es hat sich überraschender Weise gezeigt, das durch Verwendung von Auslegern das Einführen der Schablone in die Führung erleichtert ist. Durch die formelastische Ausgestaltung der Ausleger können sich diese an die Öffnung der Führung anpassen. Beispielsweise können die Ausleger beim Einführen in die Führung leicht zusammengedrückt werden. Sobald die korrespondierenden Vor- und Rücksprünge ineinandergreifen, bewegen sich die Ausleger automatisch aufgrund ihrer Formelastizität im Wesentlichen in Ihren Ausgangszustand zurück.

Optional ist es ebenfalls möglich, dass bei Systemen nach dem ersten, zweiten, dritten, vierten oder fünften Aspekt der Erfindung die Führung und die Schablone über ein Codierungsmittel verfügen, sodass eine eindeutige Zuordnung der Schablone zu einer korrespondierenden Führung möglich ist. Gegebenenfalls kann es erforderlich sein, Schablonen korrespondierenden Führungen zuzuordnen. Damit dies eindeutig erfolgen kann helfen Codierungsmittel, beispielsweise in Form von Zahlen, dabei eine Schablone in eine Führung mit einem korrespondierenden Codierungsmittel einzuführen.

Bei Systemen nach dem ersten, zweiten, dritten, vierten oder fünften Aspekt der Erfindung, die einen Tragvertiefungsvorsprung aufweisen, ist ferner bevorzugt, dass der wenigstens eine Tragvertiefungsvorsprung ein zweites Kunststoffmaterial mit einer Shore-Härte D gleich oder kleiner als, insbesondere kleiner als, die Shore-Härte D des Trägers umfasst oder daraus besteht.

Gemäß einem sechsten Aspekt der Erfindung wird das der Erfindung zugrundeliegende Problem ferner durch ein Systems zur Übertragung orthodontischer Werkzeug auf eine Ziel-Zahnoberfläche, insbesondere nach einem der vorangehenden Aspekte, gelöst, umfassend mindestens eine Zahnschiene, wobei die mindestens eine Zahnschiene einen Formschluss-Haltebereich umfasst, der formangepasst an wenigstens eine vorbestimmte Zahnoberfläche, wie Zahninnenseiten und/oder Zahnaußenseiten und/oder Kauflächen, mehrerer Zähne geformt ist, wobei der Formschluss-Haltebereich dazu ausgelegt und eingerichtet ist, die vorbestimmte Zahnoberfläche flächig, insbesondere teilflächig oder vollflächig, zu bedecken; und mindestens einen zu dem Formschluss-Haltebereich gegenüberliegenden Haltesteg umfasst, der dazu ausgelegt und eingerichtet ist, mit wenigstens einer anderen Zahnoberfläche in einen kraftschlüssigen, insbesondere kraft- und formschlüssigen, Kontakteingriff bringbar zu sein.

Es hat sich überraschenderweise gezeigt, dass unter Verwendung von Haltestegen besonders platzsparende Zahnschienen erzeugt werden können. Dies hat insbesondere den Vorteil, dass weniger Raum in der Mundhöhle des Patienten durch die Zahnschiene eingenommen wird. Somit steht mehr Raum zur Nutzung des Systems zur Übertragung von orthodontischen Werkzeugen zur Verfügung.

Hierbei sind solche Ausgestaltungsformen des sechsten Aspekts der Erfindung bevorzugt, bei denen der mindestens eine Haltesteg dazu ausgelegt und eingerichtet ist, in einen kraftschlüssigen Berührkontakt mit zwei unmittelbar benachbarten Zähnen, insbesondere im Bereich eines Zahnzwischenraums zweier unmittelbar benachbarter Zähne des Unterkiefers oder des Oberkiefers, bringbar zu sein. Über den Haltesteg kann somit ein kraftschlüssiger Berührkontakt mit zwei unmittelbar benachbarten Zähnen, insbesondere im Bereich eines Zahnzwischenraums zweier unmittelbar benachbarter Zähne des Unterkiefers oder des Oberkiefers, herbeigeführt werden. Dies hat den Vorteil, dass zur Anbringung der Zahnschiene auf den Zähnen nur eine geringe Anzahl an Haltestegen, insbesondere nur zwei Haltestege, bevorzugt nur ein Haltesteg notwendig ist.

Weiterhin werden solche Ausgestaltungsformen des sechsten Aspekts der Erfindung bevorzugt, bei denen die Zahnschiene wenigstens einen Freiraum aufweist, der zwischen dem mindestens einen Haltesteg und einem unmittelbar benachbarten weiteren Haltesteg und/oder zwischen dem Haltesteg und einem unmittelbar benachbarten Formschlussbereich an der anderen Zahnoberfläche angeordnet ist. Dadurch hat das erfindungsgemäße System zur Übertragung orthodontischer Werkzeuge den unerwarteten Vorteil, dass besonders viel Freiraum auf den mit orthodontischen Werkzeugen zu bestückenden Zahnoberflächen vorhanden ist. Somit lassen sich die orthodontischen Werkzeuge besonders einfach auf den Zahnoberflächen anbringen und auch die Nacharbeit, insbesondere in Form des Entfernens von überschüssigem Klebstoff, ist besonders einfach, insbesondere einfacher als mit Systemen, die aus dem Stand der Technik bekannt sind.

In einer bevorzugten Ausgestaltungsform des Systems nach dem sechsten Aspekt der Erfindung hat die Zahnschiene im Bereich der ihr zugeordneten vorbestimmten Zahnoberfläche eine Wandstärke von maximal 5 mm, vorzugsweise maximal 3 mm und insbesondere bevorzugt von maximal 1 mm. Es hat sich überraschenderweise gezeigt, dass unter Verwendung von Wandstärken von maximal 1 bis 5 mm besonders platzsparende Zahnschiene erzeugt werden können. Dies hat insbesondere den Vorteil, dass weniger Raum in der Mundhöhle des Patienten durch die Zahnschiene eingenommen wird. Somit steht mehr Raum zur Nutzung des Systems zur Übertragung von orthodontischen Werkzeugen zur Verfügung.

In weiteren bevorzugten Ausgestaltungsform des Systems nach dem sechsten Aspekt der Erfindung, ist die Führung im Bereich der ihr zugeordneten vorbestimmten Zahnoberfläche auf die von den von der Zahnschiene erfassten Zähnen wegweißende Oberfläche der Zahnschiene aufgesetzt. Das Aufsetzen der Führung im Bereich der ihr zugeordneten vorbestimmten Zahnoberfläche auf die Wandstärke führt dazu, dass noch weniger Raum in der Mundhöhle des Patienten durch die Zahnschiene eingenommen wird und nochmals mehr Raum zur Nutzung des Systems zur Übertragung von orthodontischen Werkzeugen zur Verfügung steht.

Bei Systemen nach dem ersten, zweiten, dritten, vierten, fünften oder sechsten Aspekt der Erfindung ist bevorzugt, dass die Zahnschiene und/oder die Schablone vorzugsweise mindestens ein formstabiles erstes Kunststoffmaterial enthält und/oder daraus bestehen, wobei das mindestens eine erste Kunststoffmaterial eine Shore-Härte D gemäß DIN EN ISO 868:2003-10 im Bereich von 74 - 93, vorzugweise von 83 bis 86, aufweist, jeweils bestimmt gemäß Skala D.

In Systemen nach dem ersten, zweiten, dritten, vierten, fünften oder sechsten Aspekt der Erfindung werden solche Kunststoffmaterialien für das erste und/oder das mindestens eine zweite Kunststoffmaterial bevorzugt, die ausgewählt sind aus der Gruppe bestehend aus Polyacrylaten, Polyolefinen, Polyurethanen, Polyetherketonen, Polyetherimiden, Polyestern, Polycaptrolactonen, Acryl-Butadien-Styrol-Copolymeren, Polyamiden und Polylactiden, wobei das Kunststoffmaterial vorzugsweise Polyacrylate, insbesondere bevorzugt transparente Polyacrylate, insbesondere Polyacrylate des Typs MED610, umfasst oder darstellt.

Zur Herstellung von erfindungsgemäßen Systemen nach dem ersten, zweiten, dritten, vierten, fünften oder sechsten Aspekt der Erfindung werden bevorzugt solche Verfahren bevorzugt, bei denen die Zahnschiene sowie gegebenenfalls die mindestens eine Schablone in einem computergestützten Verfahren, und/oder in einem additiven Verfahren, insbesondere in einem 3D-Druckverfahren, hergestellt ist. Computergestützte Verfahren können dabei beispielsweise CAD/CAM Verfahren zum substanzabtragenden Fräsen umfassen. Additiven Verfahren können wiederum beispielsweise 3D-Druckverfahren umfassen. Diese Verfahren ermöglichen unter anderem, dass alle Komponenten des erfindungsgemäßen Systems nach dem ersten, zweiten und dritten Aspekt der Erfindung in einem Verfahrensschritt hergestellt werden können.

Gemäß einem siebten Aspekt der Erfindung wird ein Kit-of-parts, umfassend mindestens ein System nach dem ersten, zweiten, dritten, vierten, fünften oder sechsten Aspekt der Erfindung und mindestens ein orthodontisches Werkzeug (W), insbesondere Brackets, Buttons und/oder Attachments, offenbart.

Gemäß einer bevorzugten Ausführungsform des Kit-of-parts liegt der Abstand zwischen dem Teil des orthodontischen Werkzeugs, das mit der Ziel-Zahnoberfläche in der Übertragungsstellung verklebt werden soll, zu der Ziel-Zahnoberfläche bevorzugt im Bereich von 0,1 mm bis 1 mm, besonders bevorzugt im Bereich von 0,2 bis 1 mm und insbesondere im Bereich von 0,3 bis 0,8 mm. Demgegenüber liegt in der Haltestellung der Abstand zwischen dem Teil des orthodontischen Werkzeugs, insbesondere der zu verklebenden Oberfläche des orthodontischen Werkzeugs, das mit der Ziel-Zahnoberfläche verklebt werden soll, zu der Ziel-Zahnoberfläche bevorzugt bei maximal 20 mm, besonders bevorzugt bei maximal 10 mm und insbesondere im Bereich von 3 bis 8 mm oder 4 bis 8 mm. Dieser Abstand beträgt demgemäß ferner vorzugsweise mindestens 3 mm sowie insbesondere mindestens 4 mm.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Dabei zeigen
- Figur 1: eine Ansicht einer Ausführungsform einer Zahnschiene nach dem sechsten Aspekt des erfindungsgemäßen Systems zur Übertragung orthodontischer Werkzeuge,
- Figur 2: einen Querschnitt einer ersten Ausgestaltungsform des erfindungsgemäßen Systems zur Übertragung orthodontischer Werkzeuge,
- Figur 3: einen Querschnitt einer Ausgestaltungsform nach dem zweiten Aspekt des erfindungsgemäßen Systems zur Übertragung orthodontischer Werkzeuge,
- Figur 4: einen Querschnitt einer weiteren Ausgestaltungsform nach dem zweiten Aspekt des erfindungsgemäßen Systems zur Übertragung orthodontischer Werkzeuge,
- Figur 5: einen Querschnitt einer Ausgestaltungsform nach dem dritten Aspekt des erfindungsgemäßen Systems zur Übertragung orthodontischer Werkzeuge in der Übertragungsstellung,
- Figur 6: einen Querschnitt einer Ausgestaltungsform nach dem dritten Aspekt des erfindungsgemäßen Systems zur Übertragung orthodontischer Werkzeuge in der Haltestellung,
- Figur 7: einen Querschnitt einer Ausgestaltungsform nach dem fünften Aspekt des erfindungsgemäßen Systems zur Übertragung orthodontischer Werkzeuge in der Übertragungsstellung,
- Figur 8: einen Querschnitt einer Ausgestaltungsform nach dem fünften Aspekt des erfindungsgemäßen Systems zur Übertragung orthodontischer Werkzeuge in der Haltestellung,
- Figur 9: einen Querschnitt einer des Trägers des erfindungsgemäßen Systems zur Übertragung orthodontischer Werkzeuge in Vergrößerung, und
- Figur 10: eine Ansicht einer Ausführungsform der erfindungsgemäßen Schablone.

In der Nachfolgenden Beschreibung exemplarischer Ausführungen der Erfindung anhand der Figuren werden für dieselben oder ähnliche Komponenten zur Verbesserung der Lesbarkeit dieselben oder ähnliche Bezugszeichen verwendet.

Orthodontische Werkzeuge werden verwendet, um Fehlstellungen von einzelnen oder mehreren Zähnen im Kiefer eines Patienten zu korrigieren. Zu diesem Zweck wird durch ein Spannbauteil mechanische Kraft bereitgestellt. Üblicherweise werden mehrere Zähne im Unterkiefer oder im Oberkiefer mit der Kraft eines Spannbauteils beauftragt, um die Zähne in eine gewünschte Stellung zu drängen. Diese Kraft wird durch orthodontische Werkzeuge, beispielswiese sogenannte Brackets, von dem Spannbauteil an mehrere Zähne übertragen. Für eine effiziente und korrekt ausgerichtete Bereitstellung der Kraft an die Zähne ist eine korrekte Positionierung der orthodontischen Werkzeuge maßgeblich. Die orthodontischen Werkzeuge sind daher regelmäßig unter Berücksichtigung der Eigenarten des patientenindividuellen Kiefers angepasst an unterschiedlichen Zähnen zu positionieren. Dabei ist eine sichere und präzise Befestigung des orthodontischen Werkzeugs am Zahn durch den behandelnden Arzt von besonderer Bedeutung.

Der Fachmann versteht, dass die nachfolgenden Ausführungen, die sich exemplarisch auf eine Zahnschiene 2 für den Unterkiefer beziehen, entsprechend für den Oberkiefer gelten. Ferner versteht der Fachmann, dass anstelle der nachfolgend beschriebenen Ausführungsformen, bei denen die Ziel-Zahnoberfläche an der Zahnvorderseite vorgesehen ist, alternativ die Ziel-Zahnoberfläche an den Rückseitenseiten der Zähne vorgesehen sein kann.

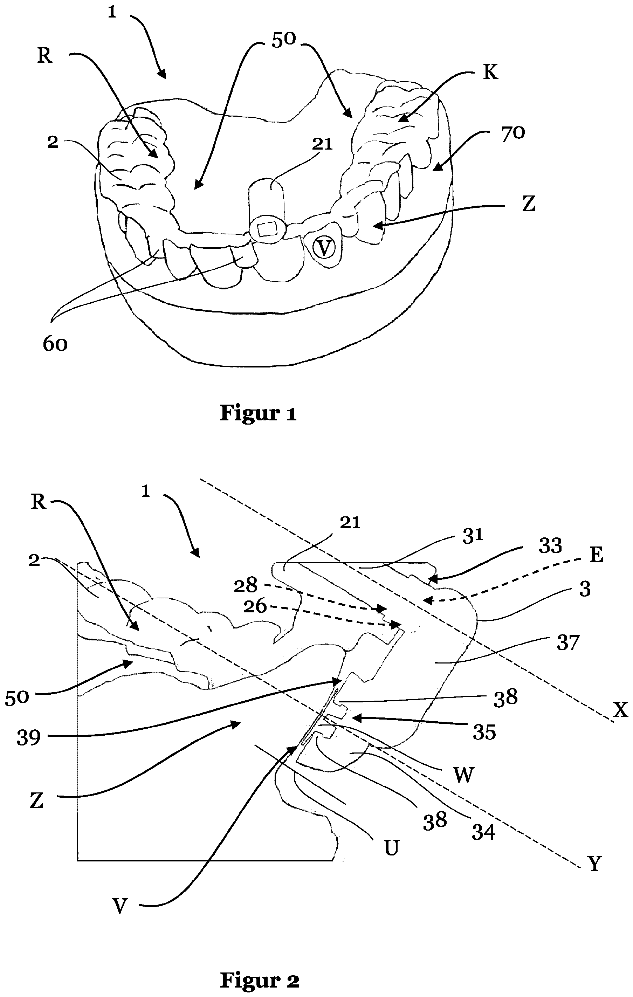

Figur 1 zeigt eine exemplarische Ansicht einer Ausführungsform einer Zahnschiene 2 des erfindungsgemäßen Systems zur Übertragung mindestens eines orthodontischen Werkzeugs W auf eine Ziel-Zahnoberfläche im Oberkiefer oder im Unterkiefer eines Patienten gemäß dem fünften Aspekt der Erfindung. Hierzu ist die Zahnschiene 2 beispielhaft aufeinem Modell eines menschlichen Unterkiefers fixiert.

Als Bestandteile umfasst ein System 1 zur Übertragung eines orthodontischen Werkzeugs W ein Zahnschiene 2 mit einer Führung 21 sowie mindestens eine auf die Führung 21 abgestimmte Schablone 3 (nicht dargestellt) mit einem Träger 34 (nicht dargestellt) zum Halten des orthodontischen Werkzeugs W (nicht dargestellt).

Die in Figur 1 abgebildete exemplarische Zahnschiene 2 ist formangepasst an die Außenkontur der Zähne im Unterkiefer 70 des Patienten. Die Zahnschiene 2 belegt die Rückseite R der Zähne im Wesentlichen vollflächig. Zusätzlich kann die Zahnschiene 2 die Kauflächen K der Zähne Z zumindest abschnittsweise vollflächig belegen. Die zum kraftschlüssigen, insbesondere kraft- und formschlüssigen und flächigen Belegen der Zähne ausgelegten und eingerichteten Abschnitte der Zahnschiene können als Formschluss-Haltebereiche 50 bezeichnet werden. Die Ziel-Zahnoberfläche V ist von einer flächigen Belegung durch die Zahnschiene 2 frei.

Für eine präzise Passform der Zahnschiene 2 und insbesondere der Formschluss-Haltebereiche 50 kann es vorgesehen sein, dass die Zahnschiene 2 in einem computergestützten Verfahren, insbesondere einem 3D-Druckverfahren, hergestellt ist. Dazu kann zunächst, unmittelbar am Kiefer oder mithilfe einer Abformung des Kiefers, ein computerbasiertes dreidimensionales Modell des Kiefers erfasst werden, etwa als CAD Datensatz. Auf Basis des dreidimensionalen Modells des Kiefers kann computergestützt eine mantelartige Passform für die Zahnschiene 2 bestimmt werden. Nachfolgend kann die Zahnschiene auf Basis der mantelartigen Passform computergestützt berechnet und sodann gefertigt werden.

Zur kraftschlüssigen, insbesondere kraft- und formschlüssigen, Paarung verfügt die gezeigte Zahnschiene 2 im Bereich der Ziel-Zahnoberfläche V der Zähne Z, die mit den orthodontischen Werkzeugen W zu bestücken ist, über Haltestege 60. Die Haltestege 60 sind gegenüberliegend zu dem Abschnitt der Zahnschiene 2 zum flächigen Belegen der Zahnrückseite R angeordnet. Die Haltestege 60 wirken mit dem Formschluss-Haltebereich 50 zusammen, um die Zahnschiene in einer vorbestimmten Position zuhalten. Hierzu sind die Haltestege 60 so ausgebildet, dass die Haltestege kraftschlüssig, insbesondere kraft- und formschlüssig, mit Teilen der Zahnvorderseiten zweier benachbarter Zähne eines Kiefers und auch mit Teilen des von zwei benachbarten Zähnen gebildeten Zahnzwischenraums, in Verbindung stehen. Die Verwendung von Haltestegen führen dabei zu einer Materialreduktion zur Herstellung der kraftschlüssig, insbesondere kraft- und formschlüssig, einsetzbaren Zahnschiene und gleichzeitig ist die Zahnvorderseite V im Wesentlichen frei zugänglich für die zu platzierenden orthodontischen Werkzeuge. Diese Materialreduktion führt dazu, dass durch die Zahnschiene weniger Raum in der Mundhöhle des Patienten eingenommen wird. Dadurch kann die Zahnschiene leicht in den Mund des Patienten eingesetzt werden und auch gegebenenfalls anfallende Arbeiten in der Mundhöhle des Patienten nach Einsetzten der Zahnschiene werden erleichtert. Bei herkömmlichen Zahnschienen sind im Vergleich zur erfindungsgemäßen Zahnschiene größere Teile der Zahnkonturen mit Material umschlossen, um eine form- und kraftschlüssige Platzierung der Zahnschiene zu ermöglichen.

Ferner verfügt die in Figur 1 gezeigte Zahnschiene 2 über eine einstückig mit der Zahnschiene 2 ausgebildeten Führung 21, die eine Schablone 3 (nicht in Figur 1 dargestellt) aufnehmen kann. Im gezeigten Beispiel werden die Zahnschiene 2 und die Führung 21 in einem oder mehreren aufeinander folgenden Schritten eines additiven Fertigungsverfahrens hergestellt. Bei generativen Herstellungsverfahren kann die Wandstärke der Kunststoffkomponenten, umfassend die Zahnschiene 2 und die Führung 21, auf das erforderliche Maß minimiert werden, sodass die die Zahnschiene 2 und die Führung 21 einen besonders geringen Platz in der Mundhöhle des Patienten einnehmen. Dies erleichtert dem behandelnden Arzt den Zugang zum Mundraum zur sicheren und präzisen Befestigung der orthodontischen Werkzeuge.

In einer nicht dargestellt Ausführungsform der Zahnschiene 2 ist es auch denkbar, dass für jeden gemäß Therapieplan mit einem orthodontischen Werkzeug W zu bestückendem Zahn, eine Führung 21 auf der Zahnschiene 2 vorgesehen ist. Hierbei erlaubt es die raumsparende Ausgestaltung der Zahnschiene, dass auch alle Zähne eines Kiefers mit orthodontischen Werkzeugen W bestückt werden könnten. In einer nicht gezeigten Ausführungsform des Systems 1 kann die Zahnschiene derart ausgestaltet sein, dass die Haltestege 60 in Eingriff mit der Zahnrückseite R gebracht werden und der Formschluss-Haltebereich 50 formkomplementär an der Ziel-Zahnoberfläche V anliegt. Dadurch können die orthodontischen Werkzeuge W besonders einfach an der Zahnrückseite R positioniert werden.

Figur 2 zeigt weiterhin einen Querschnitt eines Systems zur Übertragung mindestens eines orthodontischen Werkzeugs auf eine Ziel-Zahnoberfläche im Oberkiefer oder im Unterkiefer eines Patienten. Im Unterschied zur Figur 1 ist eine Schablone 3 über einen zur Führung 21 formkomplementären Gleitstift 31 in die Führung 21 eingeschoben. Hierbei wird die in Figuren 2, 3, 5, 7 und 9 gezeigte vorbestimmte Übertragungsstellung U im Fall der Figur 2 durch eine Positionierungseinheit, die nur einen Abstandshalter 33 umfasst, definiert. Der Abstandshalter 33 unterstützt die korrekte Positionierung des orthodontischen Werkzeugs W und kann ebenfalls verhindern, dass die Schablone 3 zu tief in die Führung 21 eingeschoben werden kann. In der in den Figuren 2 bis 9 gezeigten Ausführungsform des Abstandhalters 33 ist dieser so ausgelegt, dass die Führung 21 im Bereich Ihrer ersten Öffnung 26 einen größeren Durchmesser aufweist als im Bereich ihrer zweiten Öffnung 28. Wird die Schablone 3 in die Führung 21 translatorisch eingeschobenen, schlägt die Schablone im Bereich des Abstandhalters 33 aufgrund Ihrer äußeren Form an der Führung 21 an. Dies verhindert schließlich ein weiteres Einführen der Schablone 3 in die Führung 21.

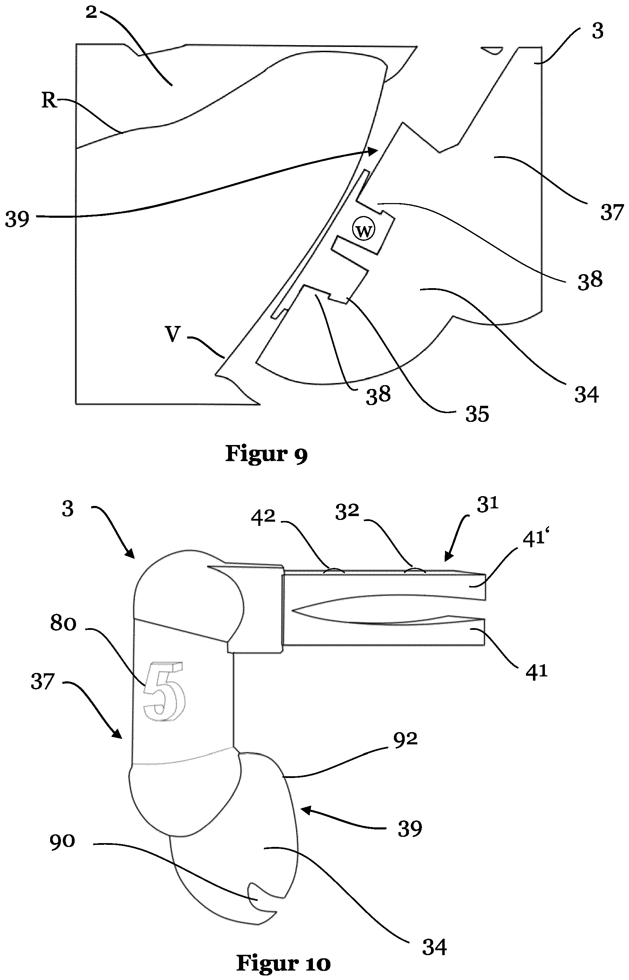

Die Schablone 3 weist ferner einen Tragarm 37 und einen Träger 34 auf, der dazu ausgelegt und eingerichtet ist, ein orthodontisches Werkzeug W vor der Ziel-Zahnoberfläche V zu halten. Dies gelingt, indem der Träger 34 auf seiner zu der Ziel-Zahnoberfläche V gerichteten Tragfläche 39 eine formkomplementäre Tragvertiefung 35 zur form- und kraftschlüssigen Aufnahme des orthodontischen Werkzeugs W aufweist. Die Tragvertiefung 35 ist dabei so ausgelegt, dass das orthodontische Werkzeug W durch eine Klemmspannung in der Tragvertiefung gehalten werden kann. Zur noch besseren wiederlösbaren Fixierung des orthodontischen Werkzeugs W, verfügt die Tragvertiefung 35 im gezeigten Beispiel in Figur 2 und 9 weiterhin über zwei Tragvertiefungsvorsprünge 38. Diese Tragvertiefungsvorsprünge 38 erlauben ein wieder lösbares Einrasten des orthodontischen Werkzeugs W in der Tragvertiefung 35. Der Einrastmechanismus wird dabei auch dadurch optimiert, dass die Tragvertiefungsvorsprünge 38 aus einem Kunststoffmaterial gefertigt werden können, dass eine geringere Shore-Härte D aufweist als der Rest des Trägers 34. Somit ist weniger Kraft notwendig, um ein Einrasten des orthodontischen Werkzeugs W in der Tragvertiefung 35 zu erwirken. Bei einer nicht dargestellten Ausführungsform der Tragvertiefung 35 ist auch denkbar, dass nur eine Tragvertiefungsvorsprung 38 vorgesehen sein kann.

Figur 9 zeigt das bereits in Figur 2 gezeigte System 1 in Vergrößerung.

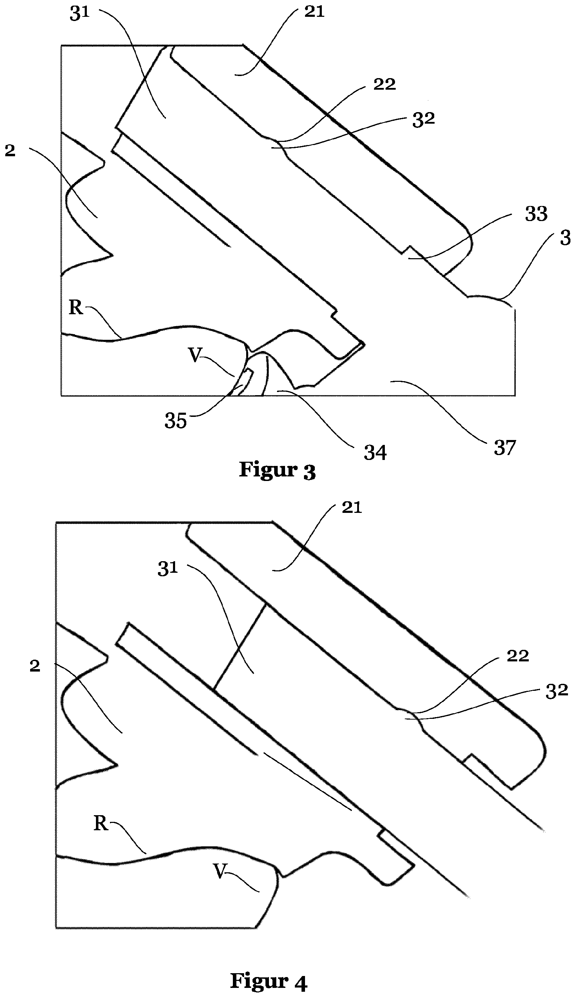

Die Figur 3 zeigt ferner einen Querschnitt eines Systems zur Übertragung mindestens eines orthodontischen Werkzeugs auf eine Ziel-Zahnoberfläche im Oberkiefer oder im Unterkiefer eines Patienten nach dem zweiten Aspekt der Erfindung. Figur 3 zeigt ebenfalls das bereits in Figur 2 gezeigte System 1, wobei die Positionierungseinheit ferner eine axiale Schulter 32 an dem Gleitstift 31 und einen Rücksprung 22 an der Innenfläche der Führung 21 aufweist, wobei der Vorsprung 32 von dem Rücksprung 22 formkomplementär an einer Innenfläche der Führung 21, aufgenommen wurde. Die Paarung der axiale Schulter 32 mit dem Rücksprung 22 sorgt dafür, dass die Schablone 3 präzise in ihrer Übertragungsstellung U verharrt. Mit der Festlegung kann der Abstand zwischen dem orthodontischen Werkzeug W und der Ziel-Zahnoberfläche V und somit indirekt die Schichtdicke des Klebstoffes zwischen dem Bracket W und der Ziel-Zahnoberfläche V eindeutig und unveränderbar bestimmt werden. Bei herkömmlichen Systemen ist gerade die Position des orthodontischen Werkzeugs W nicht unveränderbar und eindeutig bestimmbar. Mit dem erfindungsgemäßen System wird eine besonders effiziente Haftvermittlung erzielt. Hierbei ist auch sichergestellt, dass nicht zu viel Klebstoff zwischen dem orthodontischen Werkzeug W und der mit dem orthodontischen Werkzeug W zu bestückenden Zahnseite hervortreten kann, da die Übertragungsstellung U durch die Festlegung eindeutig definiert werden kann. Somit wird effektiv verhindert, dass überschüssiger Klebstoff zu entfernen ist, insbesondere überschüssiger ausgehärteter Klebstoff. In einer nicht gezeigten Ausführungsform kann ebenfalls vorgesehen sein, dass der Rücksprung auf der Oberfläche des Gleitstifts 31 ausgebildet ist und die axiale Schulter an der Innenfläche der Führung 21.

Die in Figur 4 gezeigte Ausführungsform des Systems nach dem zweiten Aspekt der Erfindung unterscheidet sich von der in Figur 3 gezeigten Ausführungsform dadurch, dass der Vorsprung 32 und der Rücksprung 22 so ausgelegt sind, dass nachdem der Vorsprung 32 von dem Rücksprung 22 formkomplementär an einer Innenfläche der Führung 21, aufgenommen wurde das System in der Haltestellung vorliegt.

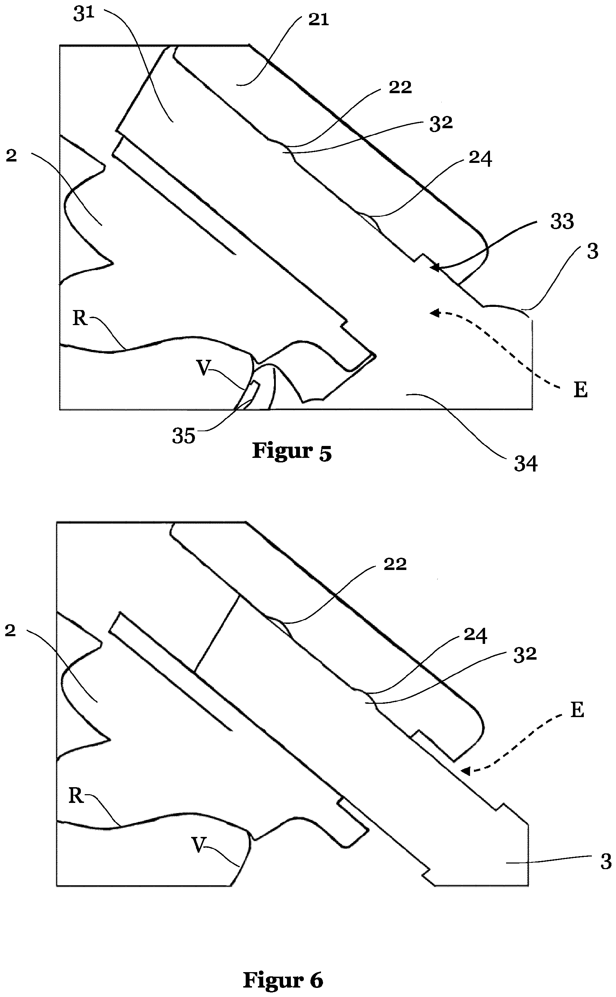

Die Figur 5 zeigt ferner einen Querschnitt eines Systems zur Übertragung mindestens eines orthodontischen Werkzeugs auf eine Ziel-Zahnoberfläche im Oberkiefer oder im Unterkiefer eines Patienten nach dem dritten Aspekt der Erfindung. Das in Figur 3 gezeigte System unterscheidet sich dabei von dem in Figur 3 gezeigten System dadurch, dass die Positionierungseinheit in Bezug auf die Eintrittsöffnung E jenseits des ersten Rücksprungs 22 beabstandet hiervor einen zweiten Rücksprung 24 an der Innenfläche der Führung umfasst. Die Paarung der axiale Schulter 32 mit dem Rücksprung 22 sorgt dafür, dass die Schablone 3 präzise in ihrer Übertragungsstellung U verharrt. In dieser Übertragungsstellung ist der erste Abstand zwischen dem Träger 34 und dem diesem Träger 34 zugeordneten Zahn hergestellt. Figur 6 zeigt dabei ein System, dass im Wesentlichen identisch zur Figur 5 ist, mit dem Unterscheid, dass das System nun durch Paarung der axialen Schulter 32 mit dem Rücksprung 24 die Schablone 3 präzise in ihrer Haltestellung H verharrt. In dieser Haltestellung ist der zweite Abstand zwischen dem Träger 34 und dem diesem Träger 34 zugeordneten Zahn hergestellt. Folglich kann der Abstand zwischen dem Rücksprung 22 und dem Rücksprung 24 der Führung 21 als Unterschied zwischen ersten und zweiten Abstand betrachtet werden. Der erste Abstand des Trägers zur Ziel-Zahnoberfläche ist dabei vorzugsweise so zu wählen, dass der Abstand zwischen einer zu verklebenden Oberfläche eines orthodontischen Werkzeugs zu der Ziel-Zahnoberfläche V bevorzugt im Bereich von 0,1 mm bis 1 mm liegt. Der Abstand zwischen einer zu verklebenden Oberfläche eines orthodontischen Werkzeugs vor der Ziel-Zahnoberfläche V entspricht dabei dem in Figur 2 erkennbaren Spalt zwischen orthodontischen Werkzeug W und der Ziel-Zahnoberfläche V.

In Haltestellung H (Figur 6) ist es beispielswiese möglich, das System 1 bereits vor Auslieferung an den Anwender, wie gezeigt, vollständig zusammenzusetzen, sodass die Zahnschiene 2 mit den bereits eingeschobenen Schablonen 3 und dem daran angebrachten mindestens einen orthodontischen Werkzeug W versendet werden kann. Dies hat ebenfalls den Vorteil, dass der Anwender nicht sicherstellen muss, dass die jeweiligen Schablonen den jeweiligen korrespondierenden Führungen zugeordnet werden, damit die zu korrigierenden Zähne während der späteren Behandlung der Zähne auch in der geplanten Weise geradegestellt werden. Die Paarung der axialen Schulter 32 mit dem Rücksprung 24 stellt sicher, dass die Schablone 3 zu keiner Zeit aus der Zahnschiene 2 fallen kann. Der Anwender hat folglich nur noch das System 1, wie ausgeliefert, in die Mund des Pateinten einzusetzen und sofern beispielsweise der Klebstoff zur Vermittlung des orthodontischen Werkzeugs W mit der Zahnvorderfläche V bereits auf das mindestens eine orthodontische Werkzeug W aufgetragen wurde, die Schablone 3 aus Ihrer Haltestellung H in die Übertragungsstellung U (Figur 4) drücken. Die Schritte des Einsetzens der Zahnschiene 2 und Eindrückens der Schablone 3, sowie gegebenenfalls vorheriges Auftragen des Klebstoffs, sind dabei die einzigen notwendigen Schritte, um das orthodontische Werkzeug W in seine finale Position vor der Zahnvorderseite V zu bringen. Ein weiteres Einstellen der Position des orthodontischen Werkzeugs W ist nicht notwendig.

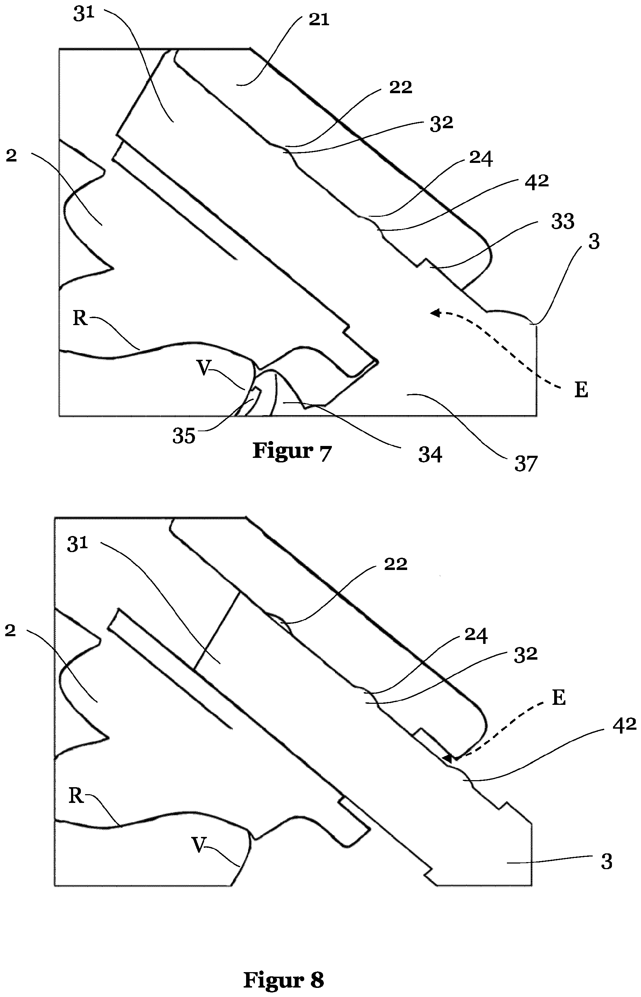

Die Figur 7 zeigt ferner einen Querschnitt eines Systems zur Übertragung mindestens eines orthodontischen Werkzeugs auf eine Ziel-Zahnoberfläche im Oberkiefer oder im Unterkiefer eines Patienten nach dem fünften Aspekt der Erfindung. Das System unterscheidet sich von dem im Figur 5 gezeigten System dadurch, dass die Positionierungseinheit in Bezug auf den Tragarm 37 jenseits des mindestens einen ersten Vorsprungs 32 beabstandet hiervor mindestens einen zweiten Vorsprung 42 umfasst. Die Paarung der axiale Schulter 32 mit dem Rücksprung 22 und die gleichzeitige Paarung der axiale Schulter 42 mit dem Rücksprung 24 sorgen dafür, dass die Schablone 3 präzise in ihrer Übertragungsstellung U verharrt. In Figur 8 ist das gleiche System wie in Figur 7 gezeigt, allerding liegt hier nur eine Paarung der axiale Schulter 32 mit dem Rücksprung 24, während der Rücksprung 22 und der Vorsprung 42 ungepaart vorliegen. Das System befindet sich somit in der Haltestellung H.

Die Figur 10 zeigt eine Ausführungsform der Schablone 3, wobei die Schablone 3 im Bereich der Führung (nicht gezeigt) zwei der Länge nach voneinander beanstandete Ausleger 41, 41' umfasst, wobei die zwei Ausleger 41, 41' in Richtung des Tragarms 37 einstückig ineinander übergehen. Die Ausleger 41, 41' sind hierbei Bestandteil des Mitnehmers 31 bzw. bilden diesen. Figur 10 zeigt den Mitnehmer 31 in seinem Grundzustand. In der gezeigten Ausführungsform sind die Vorsprünge 32, 42 auf der zu der Innenseite der Führung 21 weisenden Oberfläche des Auslegers 41' vorgesehen. Auch denkbar ist, dass die Vorsprünge auf dem Ausleger 41 oder gleichzeitig auf beiden Auslegern vorliegen können. Die entsprechenden Rücksprünge an der Innenseite der Führung sind nicht gezeigt. Die Ausleger 41, 41' sind ausleget und eingerichtet, formelastisch aufeinander zu oder voneinander weg bewegt zu werden. Somit können sie sich and die Form des Führungskanals der Führung 21 anpassen, was ein Einführen der Schablone in den Führungskanal erleichtert. Ebenfalls in Figur 10 gezeigt ist eine Ausgestaltung des Trägers 24, bei der die Tragvertiefung 35 die Tragfläche 39 teilweise einnimmt. Hierbei durchbricht die Tragvertiefung den Tragflächenrand 92, sodass eine Auslassung 90 entsteht. Die Auslassung bietet Raum für Teile der orthodontische Werkzeuge, die aufgrund Ihrer räumlichen Ausdehnung bis zum Tragflächenrand 92 reichen bzw. über diesen hinausragen. Ebenfalls in Figur 10 gezeigt ist das optionale Codierungsmittel 80 in Form einer Zahl auf dem Tragarm 37 der Schablone 3. Ein korrespondierendes Codierungsmittel in Form derselben Zahl kann auf der Oberfläche der Führung vorgesehen sein, sodass eine Verwechslung von der Schablone 3 und einer korrespondierenden Führung 21 sicher verhindert werden kann.

Die in der vorstehenden Beschreibung, in den Ansprüchen und den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

### Bezugszeichen

- 1: System zur Übertragung eines orthodontischen Werkzeuges
- 2: Zahnschiene
- 3: Schablone
- 4: Verliersicherung
- 21: Führung
- 22: erster Rücksprung (an Führung)
- 22a: erster Vorsprung (an Führung)
- 24a: zweiter Vorsprung (an Führung)
- 24: zweiter Rücksprung (an Führung)
- 26: ersten Öffnung
- 28: zweite Öffnung
- 31: Mitnehmer
- 32: erster Vorsprung (auf Mitnehmer)
- 32a: erster Rücksprung (auf Mitnehmer)
- 33: Abstandshalter
- 34: Träger
- 35: Tragvertiefung
- 37: Tragarm
- 38: Tragvertriefungsvorsprung
- 39: Tragfläche
- 41, 41': Ausleger
- 42: zweiter Vorsprung (an Mitnehmer)
- 42a: zweiter Rücksprung (an Mitnehmer)
- 50: Formschluss-Haltebereich
- 60: Haltesteg
- 70: Unterkiefer
- 80: Codierungsmittel
- 90: Auslassung
- 92: Tragflächenrand
- H: Haltestellung
- U: Übertragungsstellung
- K: Kaufläche
- R: Zahnrückseite
- V: Ziel-Zahnoberfläche
- W: orthodontisches Werkzeug
- X: X-Achse
- Y: Y-Achse
- Z: Zahn

## Patentansprüche

1. System (1) zur Übertragung mindestens eines orthodontischen Werkzeugs (W) auf eine Ziel-Zahnoberfläche im Oberkiefer oder im Unterkiefer eines Patienten, umfassend:
- mindestens eine Zahnschiene (2) für eine Vielzahl von Zähnen, ausgelegt und eingerichtet eine kraftschlüssige, insbesondere kraft- und formschlüssige, Paarung mit mindestens einem Zahn im Oberkiefer oder im Unterkiefer des Patienten einzugehen,
wobei die mindestens eine Zahnschiene (2) mindestens eine Führung (21) umfassend eine Eintrittsöffnung (E), aufweist, und
- mindestens eine Schablone (3), umfassend
einen Tragarm (37) mit
einem Träger (34), der dazu ausgelegt und eingerichtet ist, ein orthodontisches Werkzeug (W) lösbar zu halten, und
einen auf die Führung (21) abgestimmten Mitnehmer (31), wie ein Gleitstift,
wobei das System im Bereich der Führung (21) und/oder des Mitnehmers (31) eine Positionierungseinheit umfasst, die dazu ausgelegt und eingerichtet ist, den Mitnehmer (31) in der Führung (21) lösbar translatorisch zu fixieren, sodass der Träger (34) der Schablone (3) relativ zu der Zahnschiene (2) in einer vorbestimmten Position vorliegt,
wobei die mindestens eine Positionierungseinheit einen Abstandshalter (33) umfasst, ausgelegt und eingerichtet, die translatorische Bewegung des Mitnehmers (31) in der Führung (21) in der Weise zu begrenzen, dass der Träger (34) der mindestens einen Schablone (3) relativ zu der Zahnschiene (2) in einem vorbestimmten ersten Abstand vorliegt,
wobei die Positionierungseinheit mindestens einen ersten Vorsprung (32) an dem Mitnehmer (31) umfasst und wobei die Positionierungseinheit mindestens einen ersten Rücksprung (22) an der Innenfläche der Führung (21) umfasst,
oder
wobei die Positionierungseinheit mindestens einen ersten Vorsprung (22a) an der Innenfläche der Führung (21) umfasst, und wobei die Positionierungseinheit mindestens einen ersten Rücksprung (32a) an dem Mitnehmer umfasst,
wobei bei der Paarung des ersten Vorsprungs (32, 22a) und des ersten Rücksprungs (22, 32a) der Träger (34) der mindestens einen Schablone (3) in einer Übertragungsstellung relativ zu einem vorbestimmtem, der Schablone (3) zugeordneten oder zuordenbaren Zahn in dem ersten Abstand vorliegt.

2. System (1) nach Anspruch 1, **dadurch gekennzeichnet, dass** bei der Paarung, insbesondere dem formkomplementären Ineinandergreifen, des ersten Vorsprungs (32, 22a) und des ersten Rücksprungs (22, 32a) der Träger der mindestens einen Schablone (3) in einer Haltestellung relativ zu einem vorbestimmtem, der Schablone zugeordneten oder zuordenbaren Zahn in einem zweiten Abstand vorliegt.

3. System (1) nach Anspruch 1 oder 2, **dadurch gekennzeichnet, dass** die Positionierungseinheit in Bezug auf die Eintrittsöffnung (E) jenseits des mindestens einen ersten Vorsprungs (22a) beabstandet hiervor mindestens einen zweiten Vorsprung (24a), insbesondere eine axiale Schulter, insbesondere an der Innenfläche der Führung (21), insbesondere des Führungskanals, umfasst oder
dass die Positionierungseinheit in Bezug auf die Eintrittsöffnung (E) jenseits des mindestens ersten Rücksprungs (22) beabstandet hiervor mindestens einen zweiten Rücksprung (24), insbesondere an der Innenfläche der Führung (21), insbesondere des Führungskanals, umfasst.

4. System (1) nach Anspruch 3, **dadurch gekennzeichnet, dass** bei der Paarung, insbesondere dem formkomplementären Ineinandergreifen, des ersten Vorsprungs (32) oder Rücksprungs (32a) des Mitnehmers (31) und des ersten Vorsprungs (22a) oder Rücksprungs (22) der Führung der Träger (34) der mindestens einen Schablone (3) in einer Haltestellung relativ zu einem vorbestimmtem, der Schablone (3) zugeordneten oder zuordenbaren Zahn (Z) in dem zweiten Abstand vorliegt.

5. System (1) nach Anspruch 3 oder 4, **dadurch gekennzeichnet, dass** bei der Paarung, insbesondere dem formkomplementären Ineinandergreifen, des ersten Vorsprungs (32) oder Rücksprungs (32a) des Mitnehmers und des zweiten Vorsprungs (24a) oder Rücksprungs (24) der Führung der Träger (34) der mindestens einen Schablone (3) in einer Übertragungsstellung relativ zu einem vorbestimmtem, der Schablone (3) zugeordneten oder zuordenbaren Zahn (Z) in dem ersten Abstand vorliegt.

6. System (1) nach einem der vorangehenden Ansprüche, **dadurch gekennzeichnet, dass**
die Positionierungseinheit in Bezug auf den Tragarm (37) jenseits des mindestens einen ersten Vorsprungs (32) beabstandet hiervor mindestens einen zweiten Vorsprung (42), insbesondere eine axiale Schulter, insbesondere am Mitnehmer (31), umfasst,
oder
dass die Positionierungseinheit in Bezug auf den Tragarm (37) jenseits des mindestens einen ersten Rücksprungs (32a) beabstandet hiervor mindestens einen zweiten Rücksprung (42a), insbesondere am Mitnehmer (31), umfasst.

7. System (1) nach Anspruch 6, **dadurch gekennzeichnet, dass** bei der Paarung, insbesondere dem formkomplementären Ineinandergreifen, des ersten Vorsprungs (32) oder Rücksprungs (32a) des Mitnehmers und des ersten Vorsprungs (22a) oder Rücksprungs (22) der Führung (21) der Träger (34) der mindestens einen Schablone (3) in einer Haltestellung relativ zu einem vorbestimmtem, der Schablone zugeordneten oder zuordenbaren Zahn (Z) in dem zweiten Abstand vorliegt.

8. System (1) nach Anspruch 6 oder 7, **dadurch gekennzeichnet, dass** bei der Paarung, insbesondere dem formkomplementären Ineinandergreifen, des zweiten Vorsprungs (42) oder Rücksprungs (42a) des Mitnehmers (31) und des ersten Vorsprungs (22a) oder Rücksprungs (22) der Führung der Träger der mindestens einen Schablone (3) in einer Übertragungsstellung relativ zu einem vorbestimmtem, der Schablone (3) zugeordneten oder zuordenbaren Zahn (Z) in dem ersten Abstand vorliegt.

9. System (1) nach einem der vorangehenden Ansprüche, **dadurch gekennzeichnet, dass**
die Positionierungseinheit in Bezug auf die Eintrittsöffnung (E) jenseits des mindestens einen ersten Vorsprungs (22a) beabstandet hiervor mindestens einen zweiten Vorsprung (24a), insbesondere eine axiale Schulter, insbesondere an der Innenfläche der Führung (21), insbesondere des Führungskanals, umfasst, oder
dass die Positionierungseinheit in Bezug auf die Eintrittsöffnung (E) jenseits des mindestens einen ersten Rücksprungs (22) beabstandet hiervor mindestens einen zweiten Rücksprung (24), insbesondere an der Innenfläche der Führung (21), insbesondere des Führungskanals, umfasst,
und
dass die Positionierungseinheit in Bezug auf den Tragarm (37) jenseits des mindestens einen ersten Vorsprungs (32) beabstandet hiervor mindestens einen zweiten Vorsprung (42), insbesondere eine axiale Schulter, insbesondere am Mitnehmer (31), umfasst,
oder
dass die Positionierungseinheit in Bezug auf den Tragarm (37) jenseits des mindestens einen ersten Rücksprungs (32a) beanstandet hiervor mindestens einen zweiten Rücksprung (42a), insbesondere am Mitnehmer (31), umfasst.

10. System (1) nach Anspruch 9, **dadurch gekennzeichnet, dass** bei der Paarung, insbesondere dem formkomplementären Ineinandergreifen, des ersten Vorsprungs (32) oder Rücksprungs (32a) des Mitnehmers (31) und des ersten Vorsprungs (22a) oder Rücksprungs (22) der Führung (21) der Träger (34) der mindestens einen Schablone (3) in einer Haltestellung relativ zu einem vorbestimmtem, der Schablone (3) zugeordneten oder zuordenbaren Zahn (Z) in dem zweiten Abstand vorliegt.

11. System (1) nach Anspruch 9 oder 10, **dadurch gekennzeichnet, dass** bei der Paarung, insbesondere dem formkomplementären Ineinandergreifen, des zweiten Vorsprungs (42) oder Rücksprungs (42a) des Mitnehmers (31) und des ersten Vorsprungs (22a) oder Rücksprungs (22) der Führung (21) der Träger (34) der mindestens einen Schablone (3) in einer Übertragungsstellung relativ zu einem vorbestimmtem, der Schablone (3) zugeordneten oder zuordenbaren Zahn (Z) in dem ersten Abstand vorliegt.

12. System (1) nach einem der Ansprüche 9 bis 11, **dadurch gekennzeichnet, dass** bei der Paarung, insbesondere dem formkomplementären Ineinandergreifen, des ersten Vorsprungs (32) oder Rücksprungs (32a) des Mitnehmers (31) und des zweiten Vorsprungs (24a) oder Rücksprungs (24) der Führung (21) der Träger (34) der mindestens einen Schablone (3) in einer Übertragungsstellung relativ zu einem vorbestimmtem, der Schablone (3) zugeordneten oder zuordenbaren Zahn (Z) in dem ersten Abstand vorliegt.

13. System (1) nach einem der vorangehenden Ansprüche, **dadurch gekennzeichnet, dass**
der Träger (34) eine auf die Ziel-Zahnoberfläche (V) gerichtete Tragfläche (39) mit einer Tragvertiefung (35) zur kraftschlüssigen, insbesondere kraft- und formschlüssigen, Aufnahme des orthodontischen Werkzeugs (W), insbesondere eine zu dem orthodontischen Werkzeug formkomplementäre Tragvertiefung (35), aufweist.

14. System (1) nach Anspruch 13, **dadurch gekennzeichnet, dass** die Tragvertiefung (35) mindestens einen Tragvertiefungsvorsprung (38), insbesondere mindestens zwei, vorzugsweise quer, insbesondere senkrecht, zu einer, vorzugsweise linearen, Bewegungsrichtung der Schablone gegenüberliegende, Tragvertiefungsvorsprünge (38), zur kraftschlüssigen, insbesondere kaft- und formschlüssigen, Aufnahme des orthodontischen Werkzeugs (W) aufweist, wobei insbesondere sich der wenigstens eine Tragvertiefungsvorsprung (38) quer zu einer Bewegungsrichtung der Schablone in den Träger (34) erstreckt, wobei der wenigstens eine Tragvertiefungsvorsprung (38) vorzugsweise ein zweites Kunststoffmaterial mit einer Shore-Härte D gleich oder kleiner als, insbesondere kleiner als, die Shore-Härte D des Trägers (34) umfasst oder daraus besteht.

15. System (1) nach einem der vorangehenden Ansprüche, **dadurch gekennzeichnet, dass**
die Schablone (3) an der Zahnschiene (2), insbesondere an der Führung (21), beweglich, insbesondere translatorisch in einer Längsrichtung, gehalten ist, wobei die Bewegung der Schablone (3) in die Führung (21) hinein und aus der Führung (21) hinaus entlang zweier im Wesentlichen parallel zueinander verlaufenden Achsen X und Yerfolgt,
wobei die Achse X die Längsachse der Führung (21) darstellt und die Achse Y die Einschubrichtung des Werkzeugs W in die Tragvertiefung (35).

16. System (1) nach einem der vorangehenden Ansprüche, **dadurch gekennzeichnet, dass**
die Schablone und/oder die Führung (21) einen runden oder polygonalen, insbesondere viereckigen, Querschnitt aufweisen,
wobei insbesondere die Form der Querschnitte der Schablone (3) und der Führung (21) zueinander korrespondieren.

17. System (1) nach einem der vorangehenden Ansprüche, **dadurch gekennzeichnet, dass**
der, insbesondere in Zapfenform vorliegende, Mitnehmer (31) mindestens zwei, insbesondere der Länge nach, voneinander beabstandete, insbesondere federelastische, Ausleger (41, 41') umfasst, die sich von dem dem Tragarm gegenüberliegenden Ende des Mitnehmers (31) in Richtung des Tragarms (37) erstrecken und insbesondere einstückig ineinander übergehen,
der Mitnehmer (31) an dem dem Tragarm gegenüberliegenden Ende oder im Bereich des dem Tragarm gegenüberliegenden Endes vorzugsweise einen Durchmesser aufweist, der größer ist als der Durchmesser der Führung (21) und dass die mindestens zwei Ausleger in einem Umfang voneinander beabstandet sind, dass sie aufeinander zu bewegbar sind, so dass der Mitnehmer in die Führung einführbar ist, insbesondere bis zum Erreichen der Übertragungsstellung.

18. System (1) nach einem der vorangehenden Ansprüche zur Übertragung orthodontischer Werkzeuge (W) auf eine Ziel-Zahnoberfläche, umfassend:
mindestens eine Zahnschiene (2),
**dadurch gekennzeichnet, dass**
die mindestens eine Zahnschiene (2)
einen Formschluss-Haltebereich (50) umfasst, der formangepasst an wenigstens eine vorbestimmte Zahnoberfläche, wie Zahninnenseiten und/oder Zahnaußenseiten und/oder Kauflächen, mehrerer Zähne geformt ist, wobei der Formschluss-Haltebereich (50) dazu ausgelegt und eingerichtet ist, die vorbestimmte Zahnoberfläche flächig, insbesondere teilflächig oder vollflächig, zu bedecken; und
mindestens einen zu dem Formschluss-Haltebereich (50) gegenüberliegenden Haltesteg (60) umfasst, der dazu ausgelegt und eingerichtet ist, mit wenigstens einer anderen Zahnoberfläche in einen kraftschlüssigen, insbesondere kraft- und formschlüssigen, Kontakteingriff bringbar zu sein.

19. System (1) nach Anspruch 18, **dadurch gekennzeichnet, dass** die mindestens eine Haltesteg (60) dazu ausgelegt und eingerichtet ist, in einen kraftschlüssigen Berührkontakt mit zwei unmittelbar benachbarten Zähnen, insbesondere im Bereich eines Zahnzwischenraums zweier unmittelbar benachbarter Zähne des Unterkiefers oder des Oberkiefers, bringbar zu sein.

20. System (1) nach einem der vorangehenden Ansprüche, **dadurch gekennzeichnet, dass**
die Zahnschiene (2) und/oder die Schablone (3) mindestens ein formstabiles erstes Kunststoffmaterial enthält und/oder daraus besteht, wobei das mindestens eine erste Kunststoffmaterial eine Shore-Härte D im Bereich von 74 bis 93, vorzugweise im Bereich von 83 bis 86, aufweist.

21. System (1) nach einem der vorangehenden Ansprüche, **dadurch gekennzeichnet, dass**
das mindestens eine erste und/oder das mindestens eine zweite Kunststoffmaterial ausgewählt ist aus der Gruppe bestehend aus Polyacrylaten, Polyolefine, Polyurethanen, Polyetherketonen, Polyetherimiden, Polyestern, Polycaptrolactone, Acryl-Butadien-Styrol-Copolymeren, Polyamiden und Polylactiden, wobei das Kunststoffmaterial vorzugsweise Polyacrylate, insbesondere bevorzugt transparente Polyacrylate, insbesondere Polyacrylate des Typs MED610, umfasst oder darstellt.

22. Kit-of-parts, umfassend mindestens ein System (1) gemäß einem der vorangehenden Ansprüche und mindestens ein orthodontisches Werkzeug (W), insbesondere Brackets, Buttons und/oder Attachments.

## Claims

1. A system (1) for transferring at least one orthodontic tool (W) onto a target tooth surface in the upper jaw or in the lower jaw of a patient, comprising:
- at least one tooth splint (2) for a plurality of teeth, adapted and arranged in order to enter into a force-fit, in particular a force- and form-fit, pairing with at least one tooth in the upper jaw or in the lower jaw of the patient,
wherein the at least one tooth splint (2) has at least one guide (21) comprising an entry opening (E), and
- at least one template (3), comprising
a support arm (37) with
a carrier (34), which is adapted and arranged to detachably hold an orthodontic tool (W), and
a driver (31) which is adjusted to the guide (21), such as a sliding pin,
wherein
in the region of the guide (21) and/or the driver (31), the system comprises a positioning unit, which is adapted and arranged to affix the driver (31) in the guide (21) in a detachable, translatory manner, so that the carrier (34) of the template (3) is present in a predetermined position relative to the tooth splint (2), wherein
the at least one positioning unit comprises a spacer (33) adapted and arranged to limit the translatory movement of the driver (31) in the guide (21) in such a manner that the carrier (34) of the at least one template (3) is present at a predetermined first distance relative to the tooth splint (2), wherein
the positioning unit comprises at least one first protrusion (32) on the driver (31), and wherein the positioning unit comprises at least one first recess (22) on the inner surface of the guide (21) ,
or
wherein the positioning unit comprises at least one first protrusion (22a) on the inner surface of the guide (21), and wherein the positioning unit comprises at least one first recess (32a) on the driver, wherein
during the pairing of the first protrusion (32, 22a) and the first recess (22, 32a), the carrier (34) of the at least one template (3) is present at the first distance apart in a transfer position relative to a predetermined tooth that is assigned or assignable to the template (3).

2. The system (1) according to Claim 1, **characterized in that** during the pairing, in particular during the engagement of the complementary shapes, of the first protrusion (32, 22a) and the first recess (22, 32a), the carrier of the at least one template (3) is present at a second distance apart in a holding position relative to a predetermined tooth that is assigned or assignable to the template.

3. The system (1) according to any one of Claim 1 or 2, **characterized in that** in relation to the entry opening (E), on the other side of the at least one first protrusion (22a), at a distance herefrom, the positioning unit comprises a second protrusion (24a), in particular an axial shoulder, in particular on the inner surface of the guide (21), in particular of the guide channel,
or
in relation to the entry opening (E), on the other side of the at least one first recess (22), at a distance herefrom, the positioning unit comprises at least one second recess (24), in particular on the inner surface of the guide (21), in particular of the guide channel.

4. The system (1) according to Claim 3, **characterized in that** during the pairing, in particular during the engagement of the complementary shapes, of the first protrusion (32) or recess (32a) of the driver (31) and the first protrusion (22a) or recess (22) of the guide, the carrier (34) of the at least one template (3) is present at the second distance apart in a holding position relative to a predetermined tooth (Z) that is assigned or assignable to the template (3).

5. The system (1) according to Claim 3 or 4, **characterized in that** during the pairing, in particular during the engagement of the complementary shapes, of the first protrusion (32) or recess (32a) of the driver and the second protrusion (24a) or recess (24) of the guide, the carrier (34) of the at least one template (3) is present at the first distance apart in a transfer position relative to a predetermined tooth (Z) that is assigned or assignable to the template (3).

6. The system (1) according to any of the preceding Claims, **characterized in that** in relation to the support arm (37), on the other side of the at least one first protrusion (32), at a distance herefrom, the positioning unit comprises at least one second protrusion (42), in particular an axial shoulder, in particular on the driver (31),
or
that in relation to the support arm (37), on the other side of the at least one first recess (32a), at a distance herefrom, the positioning unit comprises at least one second recess (42a), in particular on the driver (31).

7. The system (1) according to Claim 6, **characterized in that** during the pairing, in particular during the engagement of the complementary shapes, of the first protrusion (32) or recess (32a) of the driver and the first protrusion (22a) or recess (22) of the guide (21), the carrier (34) of the at least one template (3) is present at the second distance apart in a holding position relative to a predetermined tooth (Z) that is assigned or assignable to the template (3).

8. The system (1) according to Claim 6 or 7, **characterized in that** during the pairing, in particular during the engagement of the complementary shapes, of the second protrusion (42) or recess (42a) of the driver (31) and the first protrusion (22a) or recess (22) of the guide, the carrier of the at least one template (3) is present at the first distance apart in a transfer position relative to a predetermined tooth (Z) that is assigned or assignable to the template (3).

9. The system (1) according to any of the preceding Claims, **characterized in that** in relation to the entry opening (E), on the other side of the at least one first protrusion (22a), at a distance herefrom, the positioning unit comprises at least one second protrusion (24a), in particular an axial shoulder, in particular on the inner surface of the guide (21), in particular of the guide channel,
or
that in relation to the entry opening (E), on the other side of the at least one first recess (22), at a distance herefrom, the positioning unit comprises at least one second recess (24), in particular on the inner surface of the guide (21), in particular of the guide channel,
and
that in relation to the support arm (37), on the other side of the at least one first protrusion (32), at a distance herefrom, the positioning unit comprises at least one second recess (42), in particular an axial shoulder, in particular on the driver (31), or
that in relation to the support arm (37), on the other side of the at least one first recess (32a), at a distance herefrom, the positioning unit comprises at least one second recess (42a), in particular on the driver (31).

10. The system (1) according to Claim 9, **characterized in that** during the pairing, in particular during the engagement of the complementary shapes, of the first protrusion (32) or recess (32a) of the carrier (31) and the first protrusion (22a) or recess (22) of the guide (21), the carrier (34) of the at least one template (3) is present at the second distance apart in a holding position relative to a predetermined tooth (Z) that is assigned or assignable to the template (3).

11. The system (1) according to Claim 9 or 10, **characterized in that** during the pairing, in particular during the engagement of the complementary shapes, of the second protrusion (42) or recess (42a) of the carrier (31) and the first protrusion (22a) or recess (22) of the guide (21), the carrier (34) of the at least one template (3) is present at the first distance apart in a transfer position relative to a predetermined tooth (Z) that is assigned or assignable to the template (3).

12. The system (1) according to any one of Claims 9 to 11, **characterized in that** during the pairing, in particular during the engagement of the complementary shapes, of the first protrusion (32) or recess (32a) of the driver (31) and the second protrusion (24a) or recess (24) of the guide (21), the carrier (34) of the at least one template (3) is present at the first distance apart in a transfer position relative to a predetermined tooth (Z) that is assigned or assignable to the template (3).

13. The system (1) according to any one of the preceding claims, **characterized in that** the carrier (34) has a support area (39) directed onto the target tooth surface (V) with a support notch (35) for the force-fit, in particular force- and form-fit, retention of the orthodontic tool (W), in particular a support notch (35) with a shape that complements the orthodontic tool.

14. The system (1) according to Claim 13, **characterized in that** the support notch (35) has at least one support notch protrusion (38), in particular at least two support notch protrusions (38) that are located opposite, preferably transverse, in particular perpendicular, to a preferably linear movement direction of the template, for the force-fit, in particular force- and form-fit, retention of the orthodontic tool (W),
wherein in particular, the at least one support notch protrusion (38) extends into the carrier (34) transverse to a movement direction of the template, wherein
the at least one support notch protrusion (38) preferably comprises or consists of a second plastic material with a Shore hardness D that is equal or less than, in particular less than, the Shore hardness D of the carrier (34).

15. The system (1) according to any one of the preceding claims, **characterized in that** the template (3) is movably held on the tooth splint (2), in particular on the guide (21), in particular in a translatory manner in a longitudinal direction,
wherein the movement of the template (3) occurs into the guide (21) and out of the guide (21) along two axes, X and Y, running essentially parallel to each other, wherein the axis X is the longitudinal axis of the guide (21) and the axis Y is the direction of insertion of the tool W into the support notch (35).

16. The system (1) according to any one of the preceding claims, **characterized in that** the template and/or the guide (21) have a round or polygonal, in particular quadrangular, profile,
wherein in particular, the shape of the profiles of the template (3) and the guide (21) correspond to each other.

17. The system (1) according to any one of the preceding claims, **characterized in that** the driver (31), which is in particular present in the form of a pin, comprises at least two side arms (41, 41'), which are spaced apart from each other, in particular lengthwise, in particular spring-elastic, which extend in the direction of the support arm (37) from the end of the driver (31) located opposite the support arm and which in particular merge with each other as one piece,
the driver (31) preferably has a diameter on the end opposite the support arm or in the region of the end opposite the support arm, which is greater than the diameter of the guide (21), and that the at least two side arms are spaced apart from each other to such an extent that they are movable towards each other, so that the driver is insertable into the guide, in particular until it reaches the transfer position.

18. The system (1) according to any one of the preceding claims, for transferring orthodontic tools (W) onto a target tooth surface, comprising:
at least one tooth splint (2),
**characterized in that**
the at least one tooth splint (2)
comprises a form-fit holding region (50), the shape of which is adapted to at least one predetermined tooth surface, such as tooth inner sides and/or tooth outer sides and/or chewing surfaces, of a plurality of teeth, wherein the form-fit holding region (50) is adapted and arranged to cover the surface of the predetermined tooth surface, in particular partially or fully; and
comprises at least one holding bridge (60) opposite the form-fit holding region (50), which is adapted and arranged to be engageable in contact with at least one other tooth surface, in particular in a force- and form-fit manner.

19. The system (1) according to Claim 18, **characterized in that** the at least one holding bridge (60) is adapted and arranged to be bringable into a force-fit touching contact with two directly adjacent teeth, in particular in the region of an interdental space between two directly adjacent teeth in the lower jaw or the upper jaw.

20. The system (1) according to any one of the preceding claims, **characterized in that** the tooth splint (2) and/or the template (3) contains at least one dimensionally stable first plastic material and/or consists of the same, wherein the at least one first plastic material has a Shore hardness D in the range of 74 to 93, preferably in the range of 83 to 86.

21. The system (1) according to any one of the preceding claims, **characterized in that** the at least one first and/or the at least one second plastic material is selected from the group consisting of polyacrylates, polyolefins, polyurethanes, polyetherketones, polyetherimides, polyesters, polycaprolactones, acrylic-butadiene-styrene-copolymers, polyamides and polylactides, wherein the plastic material preferably is or comprises polyacrylates, particularly preferably transparent polyacrylates, particularly polyacrylates of type MED610.

22. A kit of parts, comprising at least one system (1) according to any one of the preceding claims and at least one orthodontic tool (W), in particular brackets, buttons and/or attachments.

## Revendications

1. Système (1) pour la transmission d'au moins un outil orthodontique (W) à une surface dentaire cible dans le maxillaire ou la mandibule d'un patient, comprenant :
- au moins une attelle dentaire (2) pour une pluralité de dents, conçue et agencée pour former un appariement par force, en particulier par force et par complémentarité de forme, avec au moins une dent dans le maxillaire ou la mandibule du patient,
dans lequel l'au moins une attelle dentaire (2) présente au moins un guide (21) comprenant une ouverture d'entrée (E), et
- au moins un pochoir (3), comprenant
un bras de support (37) avec
un support (34) qui est conçu et agencé pour maintenir de manière amovible un outil orthodontique (W), et
un élément d'entrainement (31) adapté au guide (21), tel qu'une tige coulissante,
dans lequel le système comprend, au niveau du guide (21) et/ou de l'élément d'entrainement (31), une unité de positionnement qui est conçue et agencée pour fixer l'élément d'entrainement (31) dans le guide (21) de manière amovible en translation, de sorte que le support (34) du pochoir (3) se trouve dans une position prédéterminée par rapport à l'attelle dentaire (2),
dans lequel l'au moins une unité de positionnement comprend un espaceur (33) conçu et agencé pour limiter le mouvement de translation de l'élément d'entrainement (31) dans le guide (21) de telle sorte que le support (34) de l'au moins un pochoir (3) se trouve à une première distance prédéterminée par rapport à l'attelle dentaire (2),
dans lequel l'unité de positionnement comprend au moins une première saillie (32) sur l'élément d'entrainement (31) et dans lequel l'unité de positionnement comprend au moins un premier évidement (22) sur la surface intérieure du guide (21),
ou
dans lequel l'unité de positionnement comprend au moins une première saillie (22a) sur la surface intérieure du guide (21) et dans lequel l'unité de positionnement comprend au moins un premier évidement (32a) sur l'élément d'entrainement,
dans lequel, lors de l'appariement de la première saillie (32, 22a) et du premier évidement (22, 32a), le support (34) de l'au moins un pochoir (3) se trouve à la première distance dans une position de transmission par rapport à une dent prédéterminée associée ou pouvant être associée au pochoir (3).

2. Système (1) selon la revendication 1, **caractérisé en ce que** lors de l'appariement, en particulier de l'engagement par complémentarité de forme, de la première saillie (32, 22a) et du premier évidement (22, 32a), le support de l'au moins un pochoir (3) se trouve à une deuxième distance dans une position de retenue par rapport à une dent prédéterminée associée ou pouvant être associée au pochoir.

3. Système (1) selon la revendication 1 ou 2, **caractérisé en ce que** l'unité de positionnement comprend, par rapport à l'ouverture d'entrée (E), au-delà de l'au moins une première saillie (22a), espacée devant celle-ci, au moins une deuxième saillie (24a), en particulier un épaulement axial, en particulier sur la surface intérieure du guide (21), en particulier du canal de guidage,
ou
**en ce que** l'unité de positionnement comprend, par rapport à l'ouverture d'entrée (E), au-delà de l'au moins un premier évidement (22), espacée devant celle-ci, au moins un deuxième évidement (24), en particulier sur la surface intérieure du guide (21), en particulier du canal de guidage.

4. Système (1) selon la revendication 3, **caractérisé en ce que** lors de l'appariement, en particulier de l'engagement par complémentarité de forme, de la première saillie (32) ou du premier évidement (32a) de l'élément d'entrainement (31) et de la première saillie (22a) ou du premier évidement (22) du guide, le support (34) de l'au moins un pochoir (3) se trouve à la deuxième distance dans une position de retenue par rapport à une dent (Z) prédéterminée associée ou pouvant être associée au pochoir (3).

5. Système (1) selon la revendication 3 ou 4, **caractérisé en ce que** lors de l'appariement, en particulier de l'engagement par complémentarité de forme, de la première saillie (32) ou du premier évidement (32a) de l'élément d'entrainement et de la deuxième saillie (24a) ou du deuxième évidement (24) du guide, le support (34) de l'au moins un pochoir (3) se trouve à la première distance dans une position de transmission par rapport à une dent (Z) prédéterminée associée ou pouvant être associée au pochoir (3).

6. Système (1) selon l'une quelconque des revendications précédentes, **caractérisé en ce que**
l'unité de positionnement comprend, par rapport au bras de support (37), au-delà de l'au moins une première saillie (32), espacée devant celle-ci, au moins une deuxième saillie (42), en particulier un épaulement axial, en particulier sur l'élément d'entrainement (31),
ou
**en ce que** l'unité de positionnement comprend, par rapport au bras de support (37), au-delà de l'au moins un premier évidement (32a), espacée devant celle-ci, au moins un deuxième évidement (42a), en particulier sur l'élément d'entrainement (31).

7. Système (1) selon la revendication 6, **caractérisé en ce que**
lors de l'appariement, en particulier de l'engagement par complémentarité de forme, de la première saillie (32) ou du premier évidement (32a) de l'élément d'entrainement et de la première saillie (22a) ou du premier évidement (22) du guide (21), le support (34) de l'au moins un pochoir (3) se trouve à la deuxième distance dans une position de retenue par rapport à une dent (Z) prédéterminée associée ou pouvant être associée au pochoir.

8. Système (1) selon la revendication 6 ou 7, **caractérisé en ce que** lors de l'appariement, en particulier de l'engagement par complémentarité de forme, de la deuxième saillie (42) ou du deuxième évidement (42a) de l'élément d'entrainement (31) et de la première saillie (22a) ou du premier évidement (22) du guide, le support de l'au moins un pochoir (3) se trouve à la première distance dans une position de transmission par rapport à une dent (Z) prédéterminée associée ou pouvant être associée au pochoir (3).

9. Système (1) selon l'une quelconque des revendications précédentes, **caractérisé en ce que**
l'unité de positionnement comprend, par rapport à l'ouverture d'entrée (E), au-delà de l'au moins une première saillie (22a), espacée devant celle-ci, au moins une deuxième saillie (24a), en particulier un épaulement axial, en particulier sur la surface intérieure du guide (21), en particulier du canal de guidage,
ou
**en ce que** l'unité de positionnement comprend, par rapport à l'ouverture d'entrée (E), au-delà de l'au moins un premier évidement (22), espacée devant celle-ci, au moins un deuxième évidement (24), en particulier sur la surface intérieure du guide (21), en particulier du canal de guidage,
et
**en ce que** l'unité de positionnement comprend, par rapport au bras de support (37), au-delà de l'au moins une première saillie (32), espacée devant celle-ci, au moins une deuxième saillie (42), en particulier un épaulement axial, en particulier sur l'élément d'entrainement (31),
ou
**en ce que** l'unité de positionnement comprend, par rapport au bras de support (37), au-delà de l'au moins un premier évidement (32a), espacée devant celle-ci, au moins un deuxième évidement (42a), en particulier sur l'élément d'entrainement (31).

10. Système (1) selon la revendication 9, **caractérisé en ce que** lors de l'appariement, en particulier de l'engagement par complémentarité de forme, de la première saillie (32) ou du premier évidement (32a) de l'élément d'entrainement (31) et de la première saillie (22a) ou du premier évidement (22) du guide (21), le support (34) de l'au moins un pochoir (3) se trouve à la deuxième distance dans une position de retenue par rapport à une dent (Z) prédéterminée associée ou pouvant être associée au pochoir (3).

11. Système (1) selon la revendication 9 ou 10, **caractérisé en ce que** lors de l'appariement, en particulier de l'engagement par complémentarité de forme, de la deuxième saillie (42) ou du deuxième évidement (42a) de l'élément d'entrainement (31) et de la première saillie (22a) ou du premier évidement (22) du guide (21), le support (34) de l'au moins un pochoir (3) se trouve à la première distance dans une position de transmission par rapport à une dent (Z) prédéterminée associée ou pouvant être associée au pochoir (3).

12. Système (1) selon l'une quelconque des revendications 9 à 11, **caractérisé en ce que** lors de l'appariement, en particulier de l'engagement par complémentarité de forme, de la première saillie (32) ou du premier évidement (32a) de l'élément d'entrainement (31) et de la deuxième saillie (24a) ou du deuxième évidement (24) du guide (21), le support (34) de l'au moins un pochoir (3) se trouve à la première distance dans une position de transmission par rapport à une dent (Z) prédéterminée associée ou pouvant être associée au pochoir (3).

13. Système (1) selon l'une quelconque des revendications précédentes, **caractérisé en ce que**
le support (34) présente une surface de support (39) orientée vers la surface dentaire cible (V) avec un évidement de support (35) pour la réception par engagement par force, en particulier par engagement par force et par complémentarité de forme, de l'outil orthodontique (W), en particulier un évidement de support (35) à complémentarité de forme par rapport à l'outil orthodontique.

14. Système (1) selon la revendication 13, **caractérisé en ce que**
l'évidement de support (35) présente au moins une saillie d'évidement de support (38), en particulier au moins deux saillies d'évidement de support (38) opposées, de préférence transversalement, en particulier perpendiculairement, à une direction de déplacement, de préférence linéaire, du pochoir, pour la réception par engagement par force, en particulier par engagement par force et par complémentarité de forme, de l'outil orthodontique (W),
dans lequel en particulier l'au moins une saillie d'évidement de support (38) s'étend transversalement à une direction de déplacement du pochoir dans le support (34), dans lequel
l'au moins une saillie d'évidement de support (38) comprend de préférence un deuxième matériau plastique avec une dureté Shore D inférieure ou égale à, en particulier inférieure à, la dureté Shore D du support (34) ou en est constituée.

15. Système (1) selon l'une quelconque des revendications précédentes, **caractérisé en ce que**
le pochoir (3) est maintenu de manière mobile sur l'attelle dentaire (2), en particulier sur le guide (21), en particulier en translation dans une direction longitudinale,
dans lequel le déplacement du pochoir (3) dans le guide (21) et hors du guide (21) s'effectue le long de deux axes X et Y s'étendant sensiblement parallèlement l'un à l'autre,
dans lequel l'axe X représente l'axe longitudinal du guide (21) et l'axe Y représente la direction d'insertion de l'outil W dans l'évidement de support (35).

16. Système (1) selon l'une quelconque des revendications précédentes, **caractérisé en ce que**
le pochoir et/ou le guide (21) présentent une section transversale ronde ou polygonale, en particulier carrée,
dans lequel en particulier la forme des sections transversales du pochoir (3) et du guide (21) correspondent l'une à l'autre.

17. Système (1) selon l'une quelconque des revendications précédentes, **caractérisé en ce que**
l'élément d'entrainement (31) se présentant en particulier sous forme de tenon comprend au moins deux bras (41, 41') espacés l'un de l'autre, en particulier dans le sens de la longueur, en particulier élastiques à ressort, qui s'étendent depuis l'extrémité de l'élément d'entrainement (31) opposée au bras de support dans la direction du bras de support (37) et se prolongent en particulier d'une seule pièce l'un dans l'autre,
l'élément d'entrainement (31) présente à l'extrémité opposée au bras de support ou dans la région de l'extrémité opposée au bras de support de préférence un diamètre qui est supérieur au diamètre du guide (21) et **en ce que** les au moins deux bras sont espacés l'un de l'autre dans une mesure telle qu'ils peuvent être déplacés l'un vers l'autre de sorte que l'élément d'entrainement peut être introduit dans le guide, en particulier jusqu'à ce que la position de transmission soit atteinte.

18. Système (1) selon l'une quelconque des revendications précédentes pour la transmission d'outils orthodontiques (W) à une surface dentaire cible, comprenant :
au moins une attelle dentaire (2),
**caractérisé en ce que**
l'au moins une attelle dentaire (2)
comprend une région de maintien par complémentarité de forme (50) qui est formée avec une forme adaptée à au moins une surface dentaire prédéterminée, telle que des côtés intérieurs de dents et/ou des côtés extérieurs de dents et/ou des surfaces de mastication, de plusieurs dents, dans lequel la région de maintien par complémentarité de forme (50) est conçue et agencée pour recouvrir la surface dentaire prédéterminée à plat, en particulier sur une surface partielle ou sur toute la surface ; et
comprend au moins une nervure de maintien (60) opposée à la région de maintien par complémentarité de forme (50), qui est conçue et agencée pour pouvoir être amenée en engagement par contact par engagement par force, en particulier par engagement par force et par complémentarité de forme, avec au moins une autre surface dentaire.

19. Système (1) selon la revendication 18, **caractérisé en ce que**
l'au moins une nervure de maintien (60) est conçue et agencée pour pouvoir être amenée en contact par contact par engagement par force avec deux dents directement adjacentes, en particulier dans la région d'un espace intermédiaire entre deux dents directement adjacentes de la mandibule ou du maxillaire.

20. Système (1) selon l'une quelconque des revendications précédentes, **caractérisé en ce que**
l'attelle dentaire (2) et/ou le pochoir (3) contient au moins un premier matériau plastique de forme stable et/ou en est constitué, dans lequel l'au moins un premier matériau plastique présente une dureté Shore D dans la plage de 74 à 93, de préférence dans la plage de 83 à 86.

21. Système (1) selon l'une quelconque des revendications précédentes, **caractérisé en ce que**
l'au moins un premier et/ou l'au moins un deuxième matériau plastique est choisi dans le groupe constitué par les polyacrylates, les polyoléfines, les polyuréthanes, les polyéthercétones, les polyétherimides, les polyesters, les polycaprolactones, les copolymères acrylique-butadiène-styrène, les polyamides et les polylactides, dans lequel le matériau plastique comprend ou représente de préférence des polyacrylates, en particulier de préférence des polyacrylates transparents, en particulier des polyacrylates du type MED610.

22. Kit de pièces, comprenant au moins un système (1) selon l'une quelconque des revendications précédentes et au moins un outil orthodontique (W), en particulier des brackets, des boutons et/ou des fixations.
